# EUROPEAN PATENT SPECIFICATION

(11) **EP 3 541 998 B1**
(45) Date of publication and mention of the grant of the patent: **11.09.2024**
(21) Application number: 17871427.5
(22) Date of filing: 13.11.2017
(51) Int. Cl.: E02B 17/00, A01K 61/60, A01K 61/77, B65D 88/78, E02B 3/04

(54) **MODULAR STRUCTURES AND METHOD FOR CONSTRUCTION THEREOF**
MODULARE STRUKTUREN UND VERFAHREN ZUR HERSTELLUNG DAVON
STRUCTURES MODULAIRES ET LEUR PROCÉDÉ DE CONSTRUCTION

(30) Priority: 15.11.2016 NO 20161803
(43) Date of publication of application: 25.09.2019
(73) Proprietor: Gudesen, Hans Gude, 1639 Gamle Fredrikstad (NO)
(72) Inventor: Gudesen, Hans Gude, 1639 Gamle Fredrikstad (NO)
(74) Representative: Acapo AS
(86) International application number: PCT/NO2017/050291
(87) International publication number: WO 2018/093270

(56) References cited:
- FR-A5- 2 147 364
- GB-A- 1 067 658
- US-A1- 2002 148 187
- US-A1- 2003 138 296
- US-A1- 2004 000 114
- US-A1- 2008 302 291
- US-A1- 2015 259 125
- US-B1- 6 431 792

## Description

### Background of the Invention

### Field of the invention

The present invention relates in general to modular structures at least partly submerged in water, and in particular to tank structures for storage or processing of media in fluid form or carried in a fluid.

### Technical background

In many contexts there is a need to keep a large volume separated from the surroundings with the help of an enclosing barrier, where the primary criterion is to prevent physical exchange of material. Secondary criteria can relate to e.g. thermal insulation.

Examples of the above are holding tanks for liquids, bioreactors and enclosed fish farms. In many cases the delimited volume can be very large. Furthermore, in addition to tanks and retaining vessels of various types, large scale facilities that contain or process liquid-borne materials shall generally require physical infrastructure on a correspondingly large scale.

Traditionally, these challenges have been met by creating heavy structures with high inherent strength, employing traditional materials such as masonry, reinforced concrete and high strength steel. Examples of this are large bioreactors, protected by elaborate security constructions.

Considering first state of the art in constructing large land-based structures, a basic strategy has been to add incrementally a large number of building blocks that are linked together and immobilized by mortar or cement. Drawbacks of such "wet" methods are well known: They require skilled labour, they are time consuming and labour intensive and create irreversible structures that cannot be modified or dismantled without demolition. Over time, improvements have included generic strategies for guiding and supporting the building blocks by "dry" means, e.g. by shaping the mutually contacting surfaces of the building blocks with protrusions and cavities that fit into each other, assisting the building process and stabilizing the structure. Further improvements include shaping the building blocks with grooves or channels that communicate from one block to the next when they are assembled, being adapted to receive elements that hold the structure together, e.g. in the form of reinforcing rods that may be stabilized in castable concrete or in the form of metal bars or tie cables that are secured by nuts, clips or other means. Examples of solutions where modular building blocks are adapted to employ techniques referred above include:
- US Pat. 3,618,279, "Building block" by T.F.Sease teaches a building block having male and female portions adapted to hold a series of blocks in interconnecting relation, with or without the use of mortar. Truncated pyramidal projections on top and matching cavities at the bottom provide mating connections when the blocks are assembled on top of each other. The blocks may be held together by "wet" or "dry" means.
- UK Patent Application GB 2,394,730 A, "Mortarless brick and locking bolt building system" by J.H.O.Morrison teaches combined interlocking bricks that have recesses on their lower surface that can receive protruding studs on their upper surfaces. The studs are hollow and communicate between successive courses, and segmentally connectable bolts with integral threaded sockets are passed through any number of the aperture studs to secure successive courses.
- US Pat. 5,685,119, "Wall construction system" by B. Zschoppe teaches a wall construction system based on shaped bricks for dry attachment to each other. Each brick has a shaped projection on the top bearing surface and a complimentarily shaped recess on the bottom that engage when bricks are assembled in a wall. The bricks are formed with chases extending perpendicular to the top and bottom bearing surfaces creating vertical channels through the assembled wall.
- US Patent Application US 2002/0148187 A1, "Construction blocks and structures therefrom" by D.L. Walters teaches blocks for construction of walls and other structures, where the blocks have ridges and longitudinal grooves that fit together when the blocks are assembled on top of each other, providing horizontal and vertical channels that are adapted to receive reinforcing rods and castable concrete. The building blocks described in the above referred patents and patent applications are generally limited to applications involving straight, right angled and planar structures such as walls in static, unalterable configurations. A solution with somewhat higher degree of constructive freedom is taught by W.A. Rice:
- US Pat. 2,826,906, "Wall of building blocks" by W.A. Rice teaches a single tier wall of substantially identical elongated blocks having planar top and bottom faces. When the blocks are laid in superposed courses, segmental-spherical protrusions on top of the blocks fitting into corresponding sockets at the bottom of the blocks and help to keep them in alignment. Circular bores in each block create connecting channels between blocks in different courses and can be used for threading of reinforcing rods. The protrusions and sockets are positioned and shaped to allow rotational motion about a vertical axis, which combined with rounded corners on the blocks allow them to be assembled at an angle with each other to create corners and curved walls. The protrusions and sockets are too shallow and rounded to provide cohesion of the wall without mortar, and there are no provisions for introduction of strengthening elements beyond vertical reinforcing rods. Thus, the invention shall in practice be limited to static land-based constructions
- US 2008/0302291 A1 "Float Assembly Means" discloses a float assembly means that includes a platform consisting of a plurality of floats adjoined to float on the surface of a body of water; a bottom base below the water surface consisting of a plurality of floats adjoined that are submerged in the water; and a surrounding wall disposed between the platform and the bottom base consisting of a plurality of floats stacked together that are submerged in the water.

Prior art as exemplified above presents substantial problems when attempting to implement it on large scale marine and water-immersed structures: Whereas land-based structures are static and immutable, large structures in water shall generally be exposed to wave- and tidal-induced forces and motion. This may damage or cause disintegration of stiff and unyielding structures, particularly when acting on large assemblies of building blocks across long distances encountered with large structures. In situ construction in water is generally not practicable with "wet" methods, and typical prior art building materials are generally heavy, making deployment of prefabricated large structures or modules difficult.

Attempting to avoid the problems adhering to using prior art modular components, materials and building techniques to create large sea-borne constructions, proposals have been made for building enclosed fish farms offshore using the same principles as seagoing ships and offshore drilling platforms, i.e. rigid structures in steel able to withstand large waves and ocean swells, extending across tens to hundreds of meters. A considerable number of such solutions have been proposed but have so far proved too expensive for commercial viability. An example of a large scale heavy structure based on offshore technologies is described in International Publication Number WO 2015/099540 A1: "A semisubmersible, cylindrical net cage, closable bulkheads for a net cage and a bottom for the net cage that can be elevated", by T.K. Hammernes and A.K. Hammernes. The latter structure is budgeted to cost in excess of 500 million NOK.

Thus, the solutions according to state of the art carry with them a number of undesirable consequences related to cost of construction, limited design flexibility, limited resilience to mechanical stresses and strains, large carbon footprint, and high cost of ultimate removal and clean-up.

### Short Summary of the Invention

### Technical problem to be solved by the invention

It is thus a main purpose of the present invention to provide a system for establishing of large and scalable physical infrastructure in a marine environment, encompassing buoyant structures disposed above and below water.

It is further a main purpose of the present invention to provide a method for the construction of such infrastructure in a simple and inexpensive manner.

It is further a main purpose of the present invention to provide a system for establishing of partly or completely submerged tanks capable of storing or processing of large volumes of substance at low cost.

It is further a main purpose of the present invention to provide a system for establishing of floating platforms supporting production and other facilities.

It is still further a main purpose of the invention to provide structures that respond elastically when subjected to bending forces.

### The means required to solve the problems

The present invention achieves the purposes defined above by a synergetic combination of strategies which can be summarized as follows:
- Submersion in water provides several enabling effects: First, buoyancy in the water reduces the effective weight of the structures and thus the required strength for the structures to support themselves. This effect becomes especially important when the structural materials are themselves lightweight, cf. below. Second, the weight of liquid-borne materials which exerts large pressure strains on land-based tanks and reactors is effectively balanced out by the hydrostatic pressure acting on the tank walls when they are submerged in water. Third, the cushioning and blocking effect of the surrounding masses of water provides a security barrier against explosions, blow-outs and leaks. Finally, in many coastal areas, lakes and rivers there is convenient access to water-borne transport, and stretches of water may out-compete areas of real estate on land for the siting of industrial facilities.
- Extensive use of polymeric materials in tanks and other types of physical infrastructure: Contrary to the case of steel and concrete, objects made from polymers have near neutral buoyancy in water, and very large structures can be built and controlled in water by judicious design and incorporation of ballasting and buoyancy elements. Bulk polymeric materials lack the high mechanical strengths that can be encountered in steel and other traditional construction materials. However, they provide extraordinary constructive freedom, allowing for intricate shapes, high precision and a wide range of mechanical and chemical characteristics. This in turn makes possible a close integration of strengthening elements penetrating, supporting and surrounding the structures in question, for example by designing a network of channels for guiding strengthening elements. The latter may be rigid (e.g.: beams, rods and pillars) or flexible (e.g.: cables, straps or tubes) and may consist of any suitable material, and may be added in any required number, location and direction. As a consequence, structures can be given virtually any degree of strength, flexibility and resilience.
- Creating structures by the assembly of a plurality of modular structural elements, where each element links mechanically to other structural elements. Modular structural elements can be mass produced from polymers to high precision and can be defined with complex shapes to match their intended function in a structure. This includes internal voids and channels, as well as external contours and topographic features that determine the external appearance of the structure in question, the inter-element connectivity and the mechanical compliance of the structure.
- Employing modular structural elements that are typically much smaller than the structure in question and have linear dimensions of 30 cm or less. The consequences of this include some obvious ones, such as easy handling of elements during the building of structures, typically adding one element at a time either by hand or robot, and being able to build structure with feature details down to 30 cm. Less transparently, the choice of size is expected to have great impact on the ability to employ the present invention in remote locations and without incurring high capital cost in transport and manufacturing equipment: A preferred method of manufacturing modular structural elements is injection moulding. The associated infrastructure cost (presses, energy consumption, etc) depend strongly on the size of the elements, and keeping dimensions down opens up opportunities for locally produced elements, in certain cases on site where structures are being built, thus reducing transport logistics and ultimately the cost of the structures in question.

Briefly summarized, the present invention achieves the purposes defined above by a modular structure, a macro structure, and a method for construction of a structure as defined in the claims, where the modular structure and the macro structure comprise structure elements as defined in the claims, and mainly according to the strategies outlined above.

### Summary of the invention

A first aspect of the invention according to claim 1 is a modular structure for being at least partly submerged in a body of water, where the modular structure comprises a plurality of structure elements, where each structure element comprises polymers. Each structure element comprises one or more protruding and receiving parts, wherein the protruding parts of a structure element are arranged for mating connection with the receiving parts on another structure element, the direction of mating motion defining a longitudinal direction of the structure element. Further, the modular structure comprises strengthening elements for providing structural integrity to the modular structure, where the strengthening elements are enveloping and/or penetrating at least parts of at least two structure elements of the modular structure. The structure elements are adapted to form longitudinal channels inside the protruding and receiving parts, where the channels communicate across two or more structure elements that are in a mated connection. The structure elements have apertures adapted to form channels through the structure elements in at least one direction transverse to the longitudinal direction. The channels are adapted to guiding elongated strengthening elements. Further, the structure elements and strengthening elements are adapted to provide flexibility to the modular structure while maintaining its structural integrity by at least one of the following i) comprising material with inherent elasticity, and ii) being formed to allow relative movement between at least two structure elements. Further, the modular structure forms at least one closed structure, where a number of structure elements that overlap partially or completely in the longitudinal direction are connected in a network that closes upon itself around a volume.

The structure elements can have linear dimensions not exceeding 0,3 m, and each structure element can comprise at least 80% by volume of polymers. The structure elements and strengthening elements can be adapted to provide flexibility to the modular structure while maintaining its structural integrity when the structure is subjected to bending up to 10 degrees pr. linear meter.

The closed structure can be a tank structure delineating a volume for the storage or processing of media in fluid form or materials carried in a fluid, where the closed structure can be a cylinder.

A longitudinal dimension of the closed structure can be smaller than the largest dimension in a plane transversal to the longitudinal direction, such that the closed structure forms a circular or polygonal disk or annulus.

The protruding parts and the receiving parts of the structure elements can each be provided with at least one set of two apertures positioned so that the apertures in the protruding part align with the respective apertures in a receiving part in longitudinally attached adjacent structure elements and thus forming transversal channels perpendicular to the longitudinal direction.

The modular structure can comprise strengthening elements of which at least one is inserted in at least one of the longitudinal and the transversal channels.

The strengthening elements comprise at least one of the following: i) an elongated strengthening element, and ii) a surface element for enveloping at least parts of the structure, and said elongated strengthening element can comprise at least one of the following: a strap, a cable, a container, a tube, and a rod, and said surface element can comprise at least one of the following: a foil, a tarp, a flexible plate, and a band. Further, said elongated strengthening element can form a closed loop attaching at least two structure elements and/or modular structures, and can be arranged according to one or more of the following alternatives: i) in the longitudinal channel and ii) along an outside of each of the at least two structure elements.

The strengthening element can comprise a container or a tube adapted to be filled with one ore more of the following materials: sand, gravel, earth and pellets, gas filled bodies, expanded polystyrene and polymeric-based pellets.

The strengthening element can act as a buoyancy controlling device as one of the following: i) a flotation element by the container being filled with a material giving the strengthening element a positive buoyancy, and ii) a ballast element by the container being filled with a material giving the strengthening element a negative buoyancy.

The modular structure can comprise a strengthening element for attaching at least a first and a second structure element wherein the strengthening element is arranged to pass through a hole in each of the adjacent structure elements.

Further, the strengthening element can comprise at least one of the following: pin, bolt, and clasp. The strengthening can be arranged with one or more through holes for introduction of a strengthening element.

The protruding part and the receiving part of the structure elements can be provided with polygonal mating surfaces so that the mating connection is made at predetermined angles between the structure element and an adjacent structure element.

The modular structure can comprise at least one of a top floor and a bottom floor respectively arranged in a transversal plane perpendicular to the longitudinal direction, where the at least one of the top and bottom floors can comprise a number of disks or annuli. The at least one of the top and bottom floors can be in contact with an inside of the closed structure at an end in the longitudinal direction.

A further aspect of the invention according to claim 18 is a macro structure comprising at least a first and a second modular structure, wherein the first and second modular structures are attached to each other.

The at least first and second modular structures can contribute to form a perimeter wall of a closed modular structure delineating a macro volume. The perimeter wall can comprise an inner and/or an outer wall sandwiching the closed structures of the perimeter wall.

The at least two of the closed modular structures can be attached by an elongated strengthening element, where the elongated strengthening element is looped through a longitudinal channel or around a part of one of the at least two attached modular structures, and through a longitudinal channel or around a part of another of the at least two attached modular structures.

At least two contiguous closed structures of a macro structure can be coupled by at least one surface element.

An additional aspect of the invention according to claim 24 is a method for construction of a modular structure, characterized by the following steps:
assembling of the structure elements, such that at least a first structure element connects by mutual connection and fastening to a second structure element,
in that the first and second structure elements when connected form at least one longitudinal channel.

The method for construction of a modular structure can comprises can further comprise the following steps:
a. establishing a first part of the modular structure;
b. assembling of structure elements where the assembling occurs with the modular structure floating partially submerged in the body of water; and
c. sinking of the modular structure such that the assembly occurs at approximately a constant height over the body of water.

The assembling step of the method can occur by sequential application of the structure elements, layer by layer.

### Short description of the figures

Fig. 1a discloses a partly submerged tank structure in water according to the present invention.
Figures 1b, 1c, 1d, and 1e disclose a detailed section of a tank structure.
Figs. 2a, b, c discloses construction of a tank structure *in situ.*
Fig. 3 discloses a tank structure with through vertical columns that are driven into the seabed.
Fig. 4 discloses a tank structure that has an open bottom, where a dense fence work closes the volume between the tank structure's underside and the ocean floor.
Fig. 5 discloses a tank structure with the outer side of the walls is enclosed by a tight tarp.
Fig. 6 discloses a tank structure with a leak proof bag or sack.
Fig. 7a, b, c disclose a curved structure element and a top view and a side view of a cylindrical structure comprising a plurality of such structure elements.
Fig. 8a, b disclose structure elements with rounded end surfaces.
Fig. 9a, b, c disclose structures comprising different types of structure elements.
Fig. 10a, b, c disclose structures comprising rounded structure elements; freely curving wall, branching walls and helix-shaped wall, respectively.
Fig. 11a, b, c disclose alternative embodiments of structure elements.
Fig. 12 discloses a view of a structure comprising locking pins arranged in holes of structure elements.
Fig. 13 discloses a macrostructure comprising cylindrical structures.
Fig. 14 discloses a macrostructure comprising cylindrical structures in a tightly arranged geometry.
Fig. 15 discloses a macrostructure comprising cylindrical structures and wall structures.
Fig. 16 discloses a view of a macrostructure comprising hard-shell cylindrical structures and flexible walls.
Fig. 17 discloses a view of a macrostructure.
Fig. 18 discloses a view of a macrostructure comprising hard-shell cylindrical structures and flexible walls with strengthening elements arranged in channels.
Fig. 19 discloses an example of a macrostructure for ocean farming.
Fig. 20 discloses an example of a macrostructure comprising a network of linked tanks and cylinders.
Fig. 21 discloses an example of a macrostructure comprising a double layer of cylindrical tanks.
Fig. 22 discloses an example of a macrostructure comprising double layer wall structures.
Fig. 23 discloses a tank subdivided by planar structures.
Fig. 24 discloses an example of an annulus.
Fig. 25 discloses an embodiment where units are lashed together by straps that are threaded through longitudinal channels and looped around the walls of the units.
Fig.26 discloses an enclosed volume formed by a perimeter wall of cylindrical tanks encircling top and bottom floors.
Fig.27 discloses a macrostructure consisting of 7 hexagonal enclosed volumes that are linked together.
Fig.28 discloses a macrostructure consisting of coupled floating annuli within a triangular framing wall.
Figs. 29 a, b disclose a generic perimeter wall for macrostructures.

### List of used reference numbers

| **Number** | **Designation** |
|---|---|
| 1 | Structure element (generic) |
| 1.1 | Straight structure element with straight side walls |
| 1.2 | Straight structure element with rounded side walls |
| 1.3 | Straight structure element with one straight and one rounded side wall |
| 2 | Receiving part |
| 3 | Protruding part |
| 4 | Aperture |
| 5 | Aperture |
| 6 | Aperture |
| 7 | Aperture |
| 8 | Pipe |
| 9 | Strengthening element |
| 10 | Strengthening element |
| 11 | Channel |
| 12 | Smooth pipe |
| 13 | Floating platform |
| 14 | Floor |
| 15 | Robot |
| 16 | Column |
| 17 | Fence work |
| 18 | Surface Element |
| 19 | Bag |
| 20 | Keyhole opening |
| 21 | Alignment ridge |
| 22 | Alignment hole |
| 23 | Coupling pin |
| 24 | In-filling of material |
| 25 | Planar structures |
| 26 | Cylinder |
| 27 | Outer wall |
| 28 | Inner wall |
| 29 | Cylinder segment |
| 30 | Annulus |
| 31 | Annulus |
| 32 | Strap |

### Detailed description of the invention with reference to the figures

The invention shall be described with reference to the figures showing several examples of embodiments.

The invention is based upon the building of structures over all size scales based upon assembling and mechanical consolidating of modular elements, discussed as structure elements and strengthening elements.

A significant insight related to the preferred embodiment of the present invention is that it is considerably easier to establish structures for the storage of large volumes of liquid in tanks submerged in water than up in the open air. This is because the internal hydrostatic pressure from the liquid in a submerged tank is balanced by water pressure from the outside. Thereby, the tank's walls and bottom mainly have a limiting function between the liquid inside and outside the tank, which places considerably less demand on the tank's mechanical strength. Furthermore, deliberate use of buoyancy forces in the water reduces the demands for mechanical strength even further. By building the tank's different parts out of materials with approximately neutral buoyancy in water, for example plastic or hollow elements, there will be a greatly reduced need for strengthening elements that can bear the tank's own weight.

The construction of large structures underwater has the potential to be very costly and demanding. In a preferred embodiment of the present invention, this problem is solved by constructing the structures of special building elements that are assembled and locked in a dry zone over the water line in a continuous process where the structure slowly sinks deeper into the water as construction progresses.

The net result has dramatic effects on the volume of the structure that can be constructed within given cost limits. It also opens the way for structures constructed of light, cheap materials based upon recycled plastics. It remains to secure the structures against dynamic forces, for example: waves and underwater currents, which require special methods against stretching and bending stresses, cf. below.

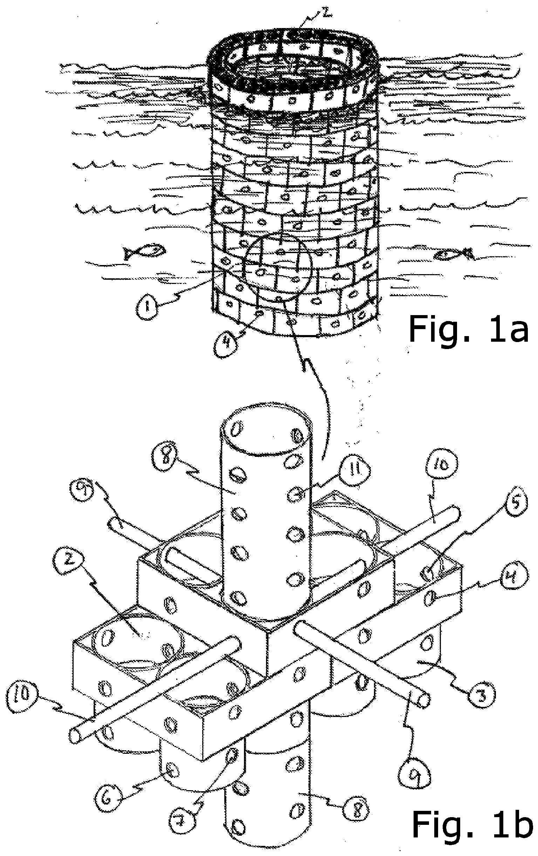

Fig.1a discloses a principle drawing of a tank in water with respect to the current invention, comprising a large number of modular structure elements (1) that are connected to each other in a contiguous or overlapping relation. Typical dimensions of the individual elements can be chosen in a wide range from sub-cm to several meters, but typically considerably less than the tank's linear dimensions and preferably less than 30 cm. Elements made of polymers are preferred, but a tank can comprise elements of several types of materials and produced via one or more types of forming techniques.

Fig.1b shows a section of the tank wall where three elements are connected via topographic structures on each element. The topographic structures, in the form of receiving parts (2) shown as tubular channels and protruding parts (3) shown as hollow pipes in Fig.1b, fit into each other to form a mated connection with a longitudinal internal channel, the direction of the mating motion being defined as a longitudinal direction of the structure elements.

Fig.1b further shows how each element has apertures (4), (5), (6), (7) in directions transverse to the longitudinal direction. Multiple apertures can be brought into alignment when structure elements are connected together, constituting channels that can accommodate strengthening elements (9), (10) that penetrate the structure elements. Thus, the structure elements can be assembled to form internal channels in three dimensions through the tank's walls and possibly bottom and top, cf. (2), (4), (5), (6), (7) on the segment in Fig.1b. The elements can have channels with different cross sectional shapes and sizes.

The internal channels can contribute to the tank's structural strength by employing them as guides or containment volumes for strengthening elements or materials in the form of cables, pipes, rods, beams, fill or casting material. Sand-filled stockings of strong textiles are relevant in this context.

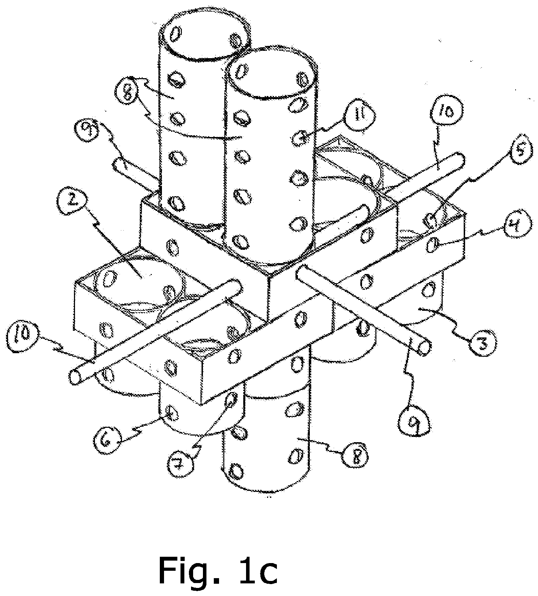

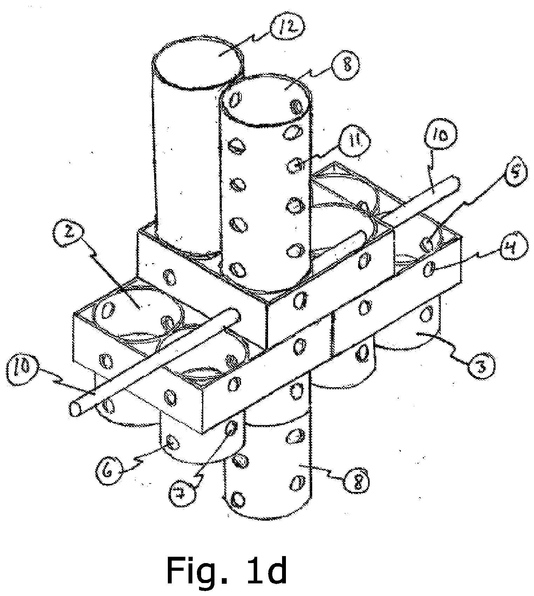

Interconnection between structure elements via topographic details can occur in several ways. Direct methods include, among others, friction and male/female type click-connections of supporting elements, hooks, bayonet couplings, etc. It can also occur through indirect methods comprising the use of helping components, for example: locking pins, rods, and columns through hole and channels in contiguous or nearby elements. Indirect methods can also comprise supporting elements, as well as clips, clamps, cables, and bands. On the segment in Fig.1b the structure elements are locked to each other with massive rods or clips through the channels in three dimensions. Vertical (i.e. longitudinal) pipes and rods (8) can be locked into position by their holes or channels (11) that interact with the element's transverse channels by fitted locking bars (9), (10). The large number of vertical (i.e. longitudinal) channels in the tank walls can serve many different purposes: in Fig.1c there are two neighboring channels filled with hole pipes (8) that are locked with a transverse locking rod (9), while this is fitted with a smooth pipe (12) through the one of the channels in Fig.1d. Such pipe can, among other things, be used for the transport of gas or liquid.

By treading lashing bands through the channels and stretching the bands, the tank is given elasticity and improved resistance against external physical effects. The structure maintains tight connections between the individual structure elements over time, even with mechanical wear, matter flow, etc.

Additional structural strength, and possibly other functions, can be achieved with the help of bands that stretch and tighten over the tank's outer surface and/or by enveloping parts of either the whole tank's outer and/or inner surfaces with foil, tarp, or bendable plates that are anchored in the tank's walls and possibly bottom and top. Relevant fastening techniques include, but are not limited to, the following: glue, Velcro bands, buttons, pins, and screws. A preferred fastening method is to use a mechanical fastening system where the structure elements are textured on the surface that forms the tank's outer and/or inner side. The texturing can, for example, be in the form of spikes, columns, pimples, hooks, or pipes, shaped such that it binds with reciprocal texturing on the foil, tarp, or the bendable plate to be fastened. Several layers of foil, tarp, or bendable plates can be laid on top of each other, such that they are textured on both sides and possibly added in several layers and stretching directions.

With big tanks, where the radius of curvature far exceeds the size of the structure elements, the linear structure elements can form segments with linear facets in curved macro-surfaces that form in other ways than by the shape of the individual structure elements. Tensile and bending forces can occur between anchoring points inside or outside the tank's walls, from stiffening and tension elements that follow the channels through the structure in strategic directions or by connecting via elements and struts to anchoring points on other parts of the structure or outside this. Examples of structures that can be stabilized by tensile forces are domes and arches with radial stress and cylinders with tangential and axial stresses.

It will be clear that tank structures based on structure elements and strengthening elements that are assembled and connected according to the present invention may be built and utilized on dry land.

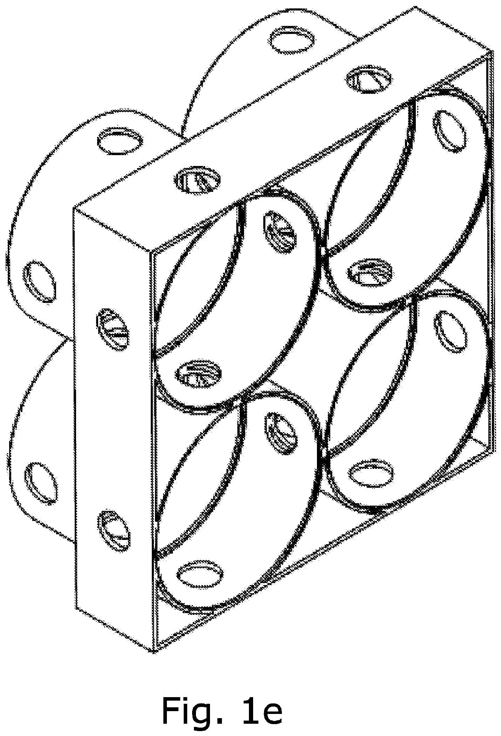

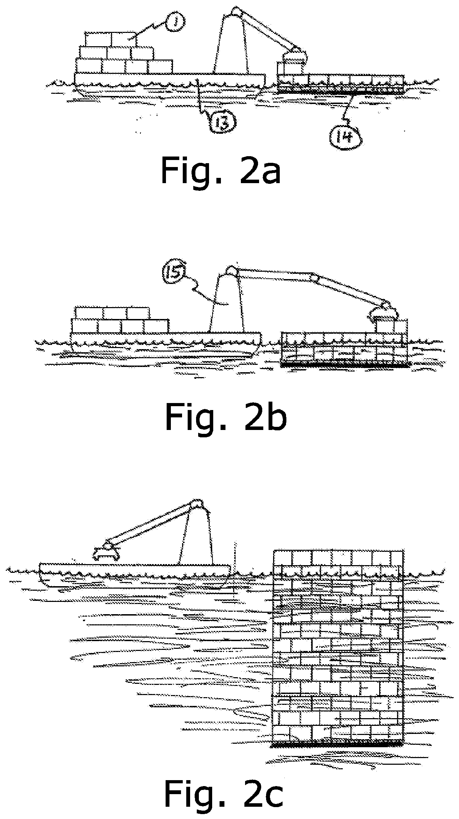

At the same time, it will be obvious that the building of large, floating, and light weight tanks such as discussed in Fig.1 on land with subsequent launching entails considerable practical problems. The present invention solves these problems by building tanks *in situ*, in that they utilize a system based upon modular structure elements that are added incrementally to the structure that is always partly submerged in water. FIGs.2a-c shows a principle drawing of a preferred building method according to the present invention. The construction occurs from floating platforms (13) inside and/or outside the volume of the tank. The tank is built from the bottom (14) by adding individual elements (1) or groups of assembled individual elements. In the example shown, the construction is performed by a robot (15). The tank structure initially has close to neutral buoyancy and may, with moderate action, be brought to float with the construction zone at an appropriate height above the surface of the water. Such action can comprise floating elements coupled to the structures upper part and weight or ballast coupled to the upper part of the structure. The net buoyancy can also be controlled via material that fills the channels in the structure. Thus, sand or cement can be poured directly into the channels to increase weight, or bags may be inserted that are pre-filled with material or are filled after having been fitted into the channels. An alternative is to employ empty beverage bottles that fit inside the channels: Such bottles may be filled with sand or another material to provide ballasting weight, and may be stacked end to end inside the channels. In their empty state and with the cap on they can function as flotation elements, filling the channels in the structure.

The result of this building method is that the work can always be performed in a dry zone that is easily accessible at moderate height above the waterline. As the construction progresses (Fig.2b, Fig.2C) the structure sinks deeper into the water and the tank can in principle achieve unlimited depth. The locking of neighboring elements with straps, rods, staples, or clips occurs as new elements are mounted upon or against the previous ones. The global structural consolidation of the tank is achieved by a long strengthening element, for example a pipe, being inserted through channels that penetrate the structure in strategic directions. Such strengthening elements can, for example, be fastened in the structure's bottom and be joined stepwise in height as construction progresses.

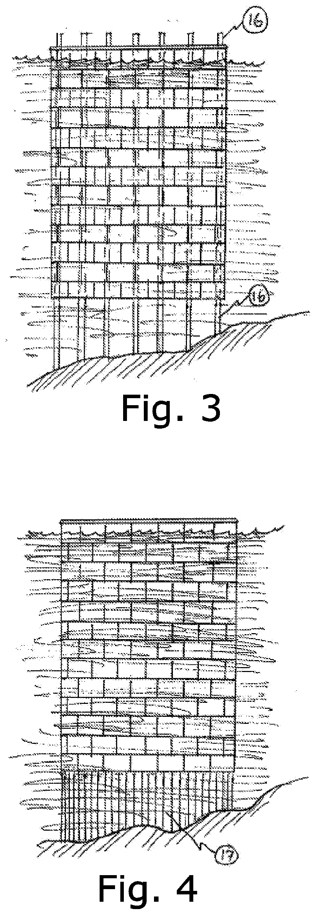

Fig.3 shows a tank that is resting on the seabed and anchored to it by means of vertical columns (16). Here the vertical through channels from the surface act as guides for the columns. After the tank is built high enough, the columns are driven down into the bottom. The columns can have several functions, for example as solid anchoring and as a support structure for the tank. Hollow columns can be used for the guiding of probes and transport of gas and fluids to and from the area under the tank and under ground.

The tank can be equipped with a floor (ref (14) on Fig.2a) or it can have an open bottom with a free water volume underneath. An alternative is that the tank can rest upon the seabed and be open in the bottom, ref. Fig.3 and Fig.4, which gives direct access to the area under the tank. This is relevant in situations where material shall be collected from the benthonic zone for processing within the tank's volume. In such situations and where the floor is uneven, the closing of the area underneath the tank can be formed by a column formed from a dense fence work (17) from the bottom of the tank's side wall and down into the under ground, cf. Fig.4. To achieve a seal between the columns, the lowest part can have a flexible surface coating that expands when the column comes out of the guide channel into the water under the tank. This will result in that the structure in the example shown in Fig.4 is suited to allow digging and processing of the ground under the tank without the water mass outside being polluted. With the removal of mass within the enclosed area, the columns in fence work can be driven further down as the digging progresses to prevent collapsing of the edges.

This construction technique, where a tank without a bottom is built downwards in a water mass until it reaches the seabed, occurs with a minimum amount of disturbance of the relevant water volume. This gives unique possibilities to survey the local environment and investigate plant and animal life at different depths in the water column.

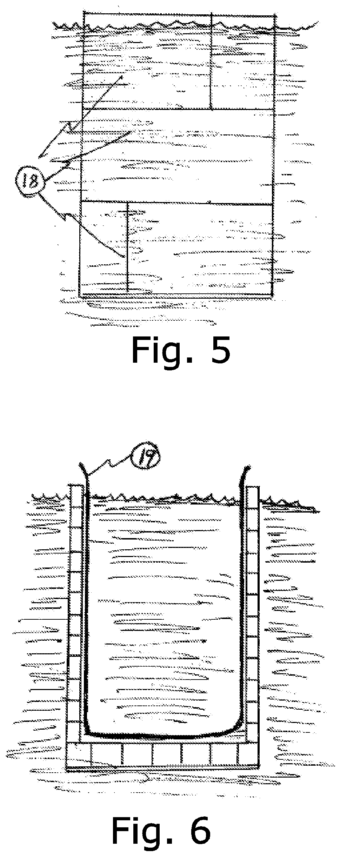

In many situations it is especially important that the tank is sealed, such that there is no material transport between the tank's volume and the surrounding water mass. This can be achieved in many ways:
- Closing of the tank's outside with a foil or tarp or a flexible plate ((18) on Fig.5.
- Use of a bag (19) that is submerged in the tank and covers the inside surface (Fig. 6); where the bag can be water tight.
- Use of an elastic sleeve between every element that is integrated in the tank during construction, combined with compression of the joints via tension bands in the walls.

It can also be relevant to control the atmosphere in the volume over the fluid surface inside the tank, for example when there are poisonous gasses present in the tank or when the contents must be protected from contamination from outside. When plants and animals are cultivated in the tank, it may be desirable to collect CO₂ that is produced. This can be achieved with a number of possible techniques that will be known for one skilled in the art.

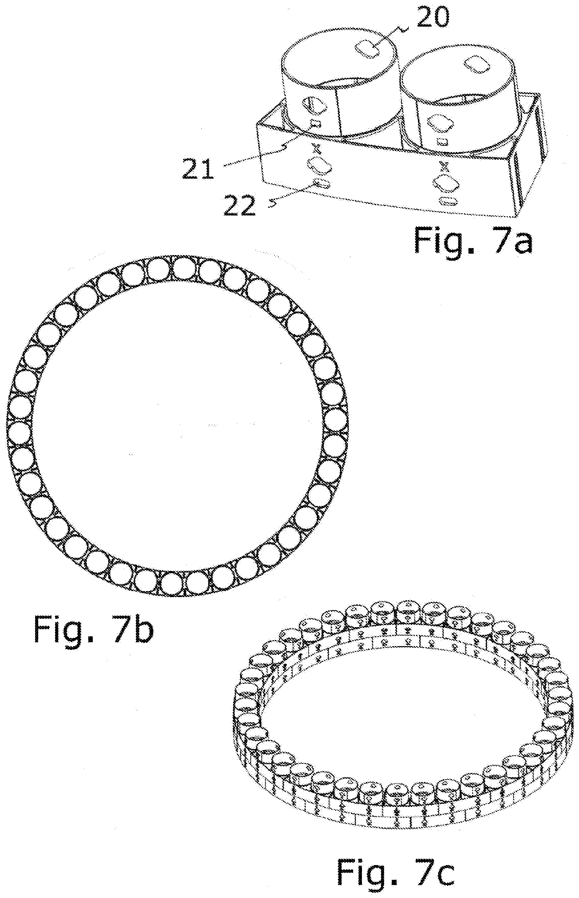

The structure elements according to the present invention incorporate the essential enabling features for the assembling of structures where tanks, walls and connecting elements form large scale consolidated complexes with advanced functionalities and unlimited dimensional scalability. This shall now be demonstrated by some preferred embodiments with reference to the structure elements shown in Figs.7a,b,c , Figs.8a,b and Figs.11a,b,c.

The structure element in Fig.7a is terminated at either end by a flat surface with sharp corners and straight walls. It represents a class of structure elements with a geometry that aligns two structure elements when they are assembled end to end in a wall-like structure. This class of structure elements shall resist being brought out of alignment and shall be preferred when building "hard shell" structures. Such structure elements need to be pre-shaped if they are to form part of a curved structure, and the structure element in Fig.7a is slightly curved such that it can form part of a cylindrical wall as shown in Figs. 7b,c.

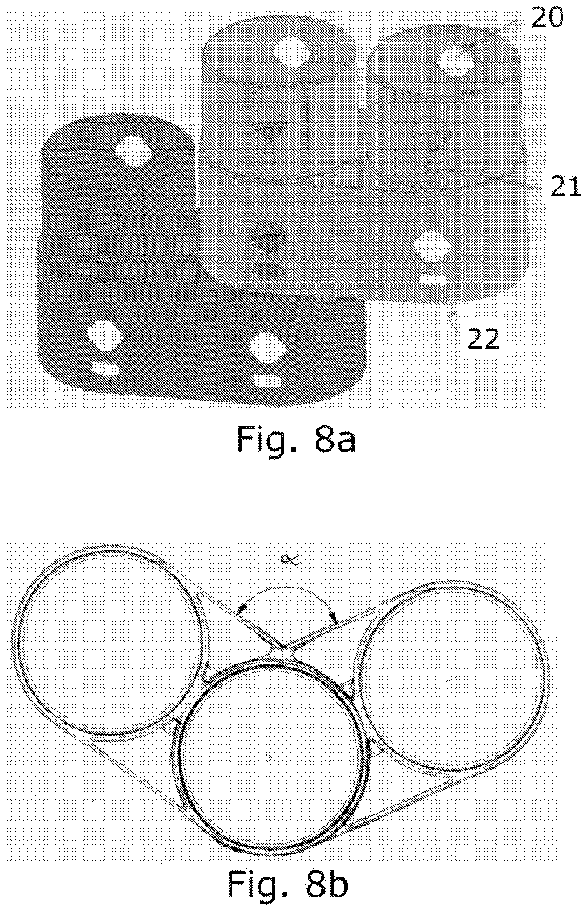

The structure elements in Figs.8a,b represent a different class of structure elements where the end surfaces of a structure element are rounded such that the structure element can pivot relative to an over/underlying and/or contiguous structure element when connected via their protruding and receiving parts. This shall allow for incorporation in straight as well as curved structures, cf. below. Fig.8a shows such a structure element with straight sidewalls and two internal channels, while the structure element in Fig.8b has three channels and forms a V shape defined by the angle α as shown. The latter type of structure element is particularly suited for incorporation into structures with corners.

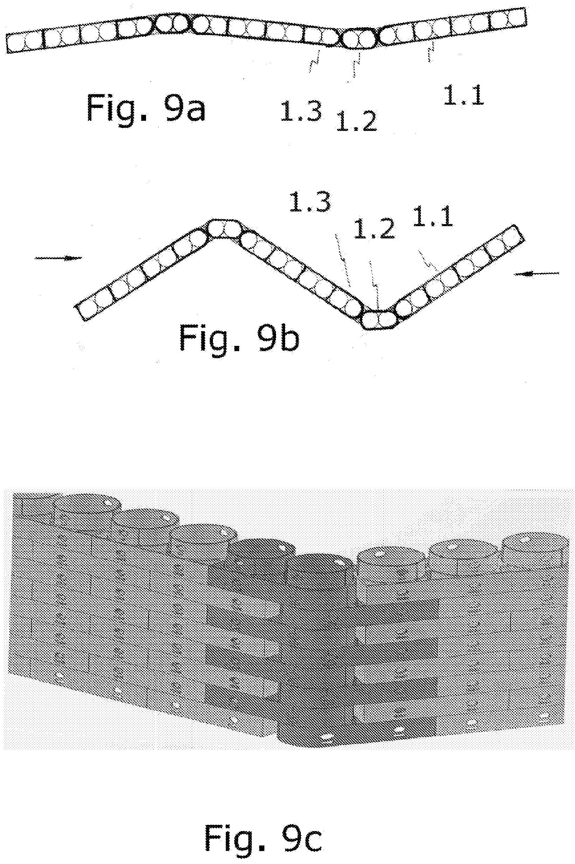

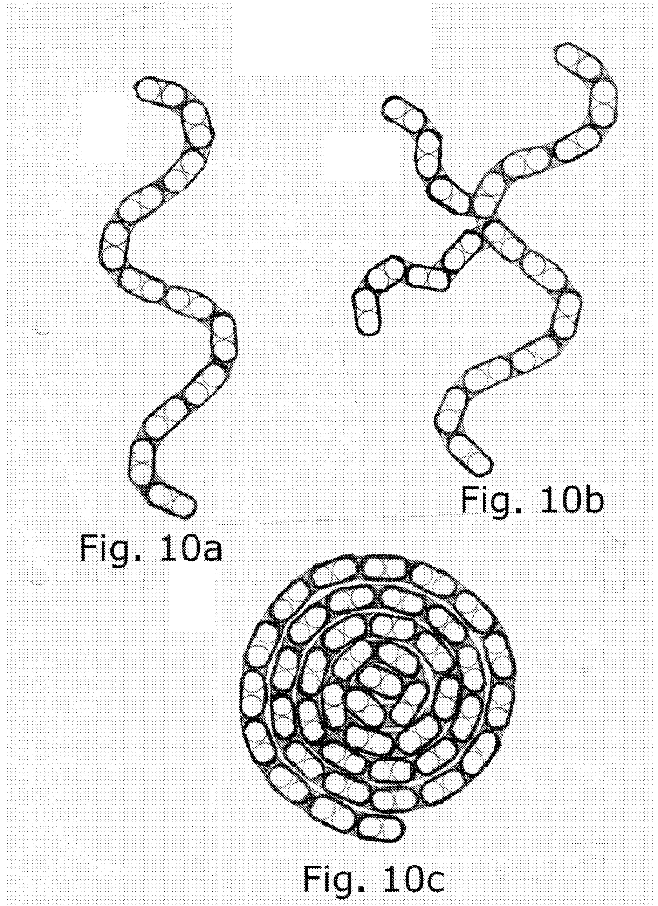

Figs.9a,b and Figs.10a,b,c provide some examples of how the two classes of structure elements can be linked separately or in combination to create macrostructures with special properties and geometries: In Fig.9a is shown a top view of a wall with straight parts separated by bends at specific pivot points. In this case, structure elements (1.1) of the type shown in Fig.7a, but with straight sidewalls constitute the straight parts, while the pivot points incorporate structure elements (1.2) of type shown in Fig.8a as well as a hybrid variant (1.3) where one end is straight and one end is rounded. As shown in Fig.9a and Fig.9b, the different parts of the wall can articulate in a predefined fashion when subjected to an outer force. As shown in Fig.9c, a hinged corner can be created in a wall by means of structure elements of the type (1.3), where at the same time the wall adjacent to the hinge retains stiffness against bending forces. This enables the construction of polygons of various shapes. In Figs.10a,b,c only structure elements of the rounded type are used. Fig.10a shows a top view of a freely curving wall, while Fig.10b shows several curving walls that branch from each other. Fig.10c shows a top view of a helix-shaped wall where the innermost structure elements are connected at near right angles to each other.

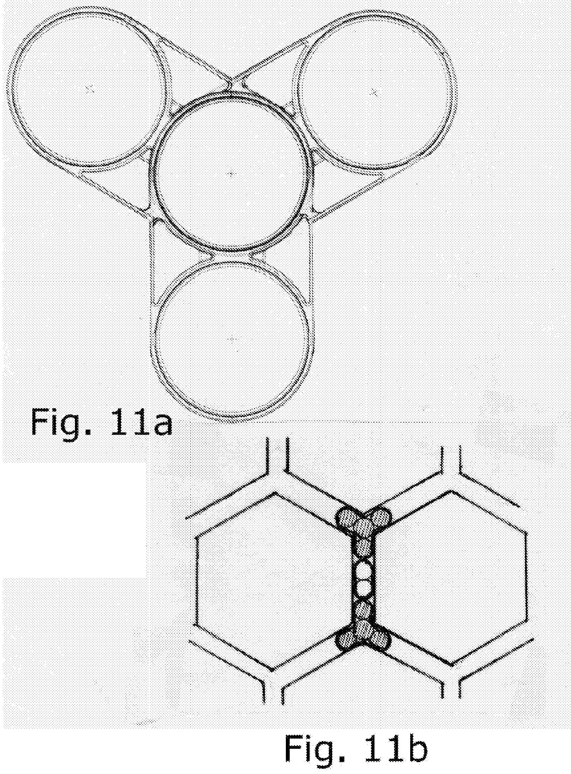

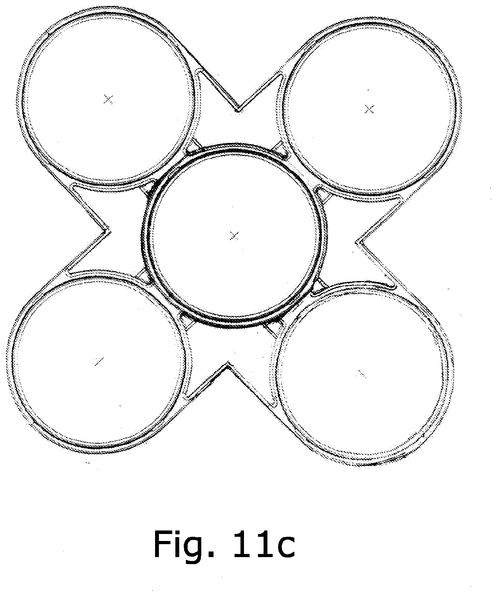

Figs. 1 1a,b,c show examples of how the basic structure elements shown in Fig.8a can be modified to provide a branching structure element. In Fig.11a the structure element defines connections in three directions separated by 120°, and can constitute a coupling node in a hexagonal network as indicated in Fig.11b. Analogously, the structure element in Fig. 11c defines connections in four directions separated by 90°. The protruding ends of the structure elements in Figs. 11a,b,c are rounded and shall allow pivoting of coupled structure elements in a flexible macrostructure. Structure elements similar to that in Figs.11a,c can also be made with sharp corners and straight end walls, in analogy to the structure element shown in Fig.7a, leading to "stiff" structures that resist shape change.

A central feature of the present invention is that structure elements can "dry lock" to each other, i.e. they can be reversibly assembled into macroscopic structures with considerable structural integrity without the need to employ glue or cement. This has obvious advantages in many instances (rapid prototyping, test assemblies, etc) and may be followed up by subsequent mechanical consolidating of the macrostructures. In addition to friction coupling between protruding and receiving parts in the structure elements, the elements may have topographic features as exemplified in Fig.7a and Fig.8a where the structure elements have "keyhole" openings (20) for accommodating locking pins (cf. below) as well as ridges (21) and matching holes (22) to provide a steering and click function during assembly.

Structure elements according to the present invention are preferably made from polymers by means of a thermal shaping technique such as injection molding. Polymers can be given a wide range of mechanical properties by selection of polymer type and loading with reinforcing fibers. A central property in the present context is the degree of dimensional precision and the complexity of structural details that can be achieved. This enables highly controlled friction and displacement tolerance properties between mating and contacting structure elements, which contribute to predictable compliance and resilience of assembled structures when subjected to external forces.

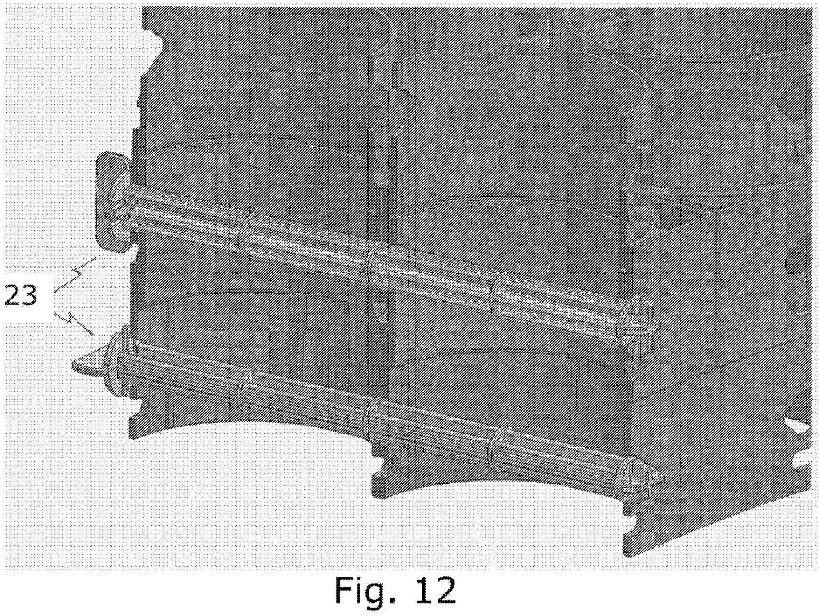

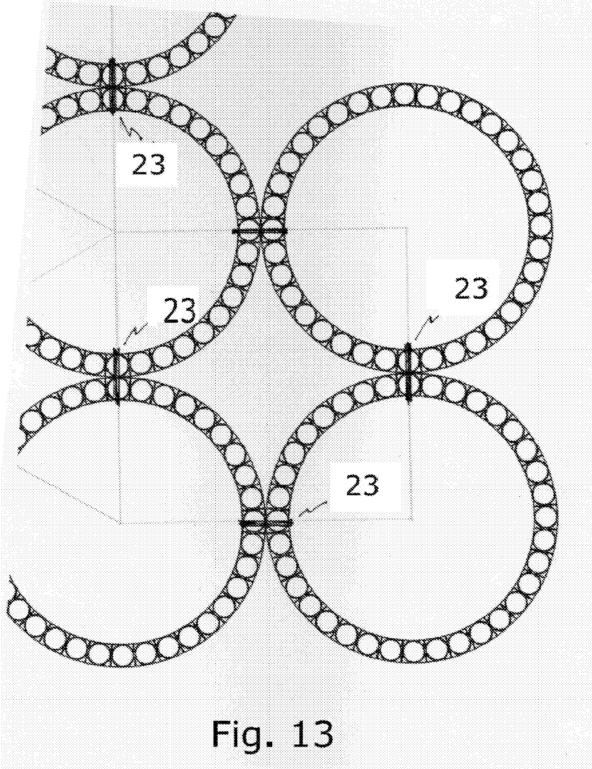

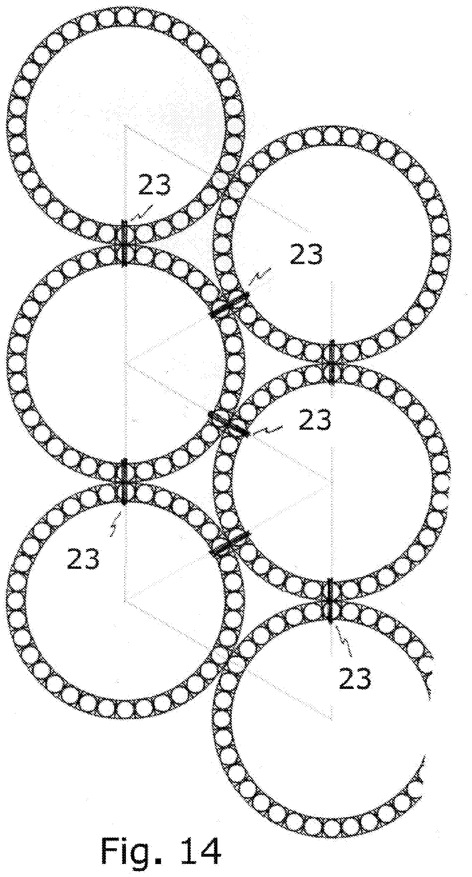

When high mechanical strength is required, structure elements can be locked in the vertical and horizontal directions by various means as described previously. One solution is shown in Fig.12 where coupling pins (23) are inserted through the keyholes in the structure elements and twisted to effect locking. This prevents the structure elements from being pulled out from each other vertically. At the same time, the long pins shown in Fig.12 can link one structure of stacked structure elements to another, parallel structure. This is illustrated for the case of cylindrical tanks in Fig.13 and Fig.14, where pin keyholes on structure elements in different structures are exactly aligned in a 90° and a 60° geometry, respectively (coupling pins indicated as (23)). As shall be evident to a person skilled in the art, many variants of locking pins are possible, depending on the materials and geometries in the structure and strengthening elements. In certain cases where channels in the structure elements contain in-filled sheet or textile materials, penetrating bolts or nails with sharp points may be inserted through holes in the structure elements, in analogy to the coupling pins shown in Figs.12, 13 and 14.

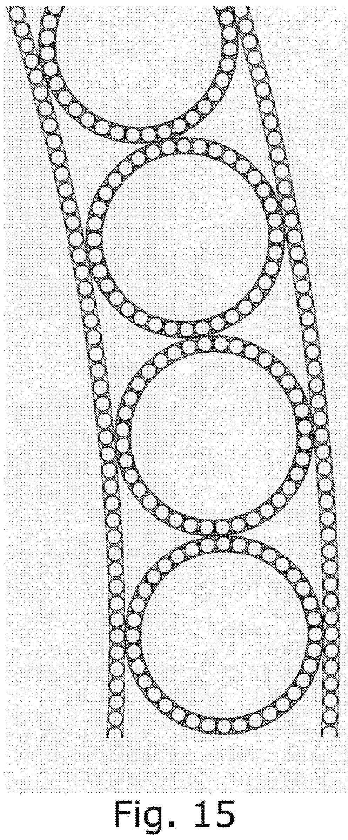

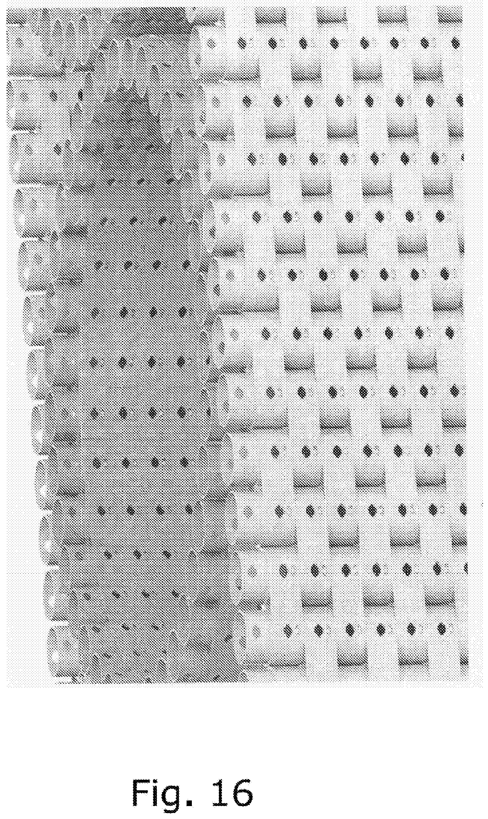

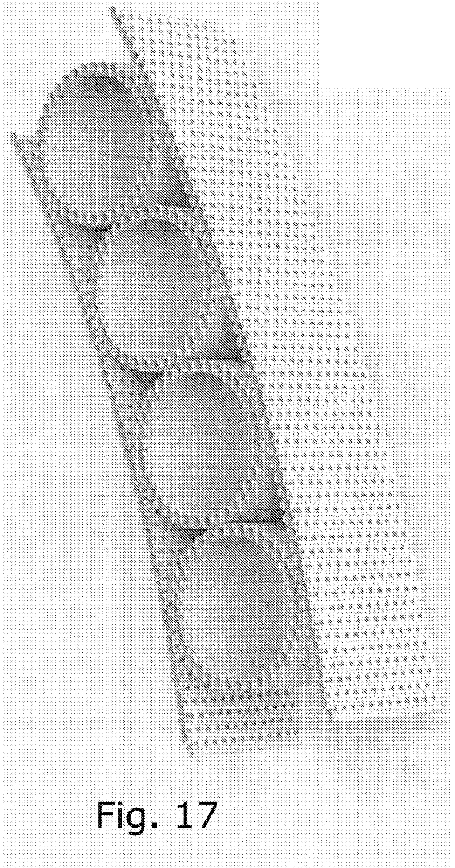

Figs.15, 16, 17 show how a large barrier or wall can be constructed by combining the structure elements in Fig.7a and Fig.8a: In the figures, cylindrical tanks are locked together between an inner and outer sheet, forming a very large circular enclosure (only a segment is shown here). The structures are kept together by means of strengthening elements not shown in the figures. When coupling pins are used to link separate substructures in a macroscopic curved structure as exemplified in Figs.15, 16, 17, they may be inserted at quasi-random contact points where keyhole alignment occurs opportunistically, the required degree of alignment being reduced by shaping and scaling the keyholes with a tolerance margin. Very strong and resilient constructions can be obtained by employing cables, straps or strips that are weaved through the keyholes instead of coupling pins. This reduces the importance of alignment and makes possible short- as well as long-distance cross-linking between individual elements and macrostructures.

Structures made from structure elements with sharp corners as shown in Fig.7a shall provide hard shells that resist flexing, whereas rounded structure elements as shown in Fig.8a in addition to allowing integration in curves and corners in constructions shall permit flexing and motion in the horizontal plane. Macrostructures in water can thus be built with a combination of "hard shell" tanks, cylinders and walls that are connected or enclosed by flexing walls or other structures, all of which are kept together, by one or more of the following:
i) horizontal and vertical rigid strengthening elements in the form of tubes, rods and pins, and/or:
ii) in-filled bags, tubes and containers in the vertical channels, and/or:
iii) a crosslinking horizontal, vertical and diagonal network of flexible strips, cables and straps.

Together, these features shall enable such macrostructures to absorb and tolerate ocean currents and wave motion while maintaining the structural integrity of critical substructures.

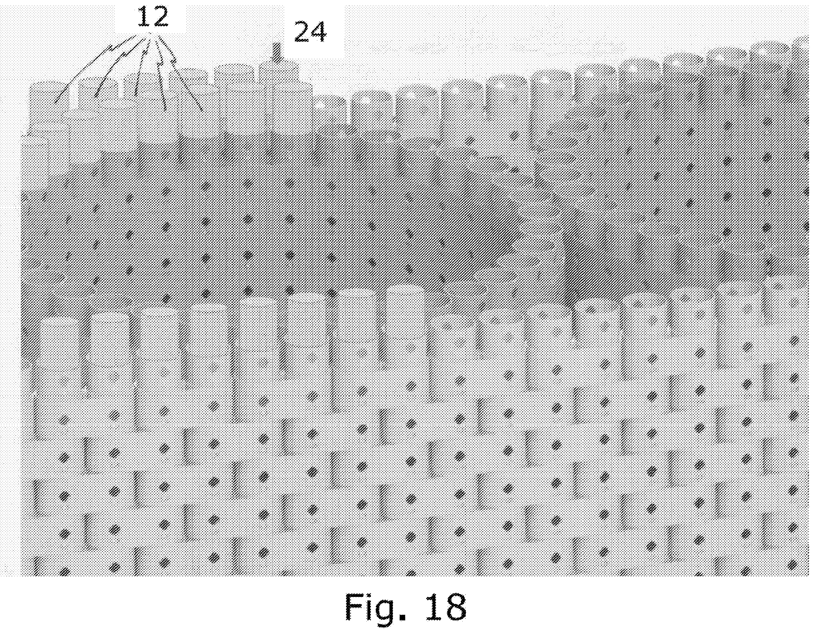

In-filled bags, tubes and containers in the vertical channels may serve multiple functions where they in addition to strength and integrity contribute various functionalities to the structure: In Fig.18 is shown an example where tubular plastic pipes (12) have been inserted in selected vertical channels traversing a wall and a cylinder structure. These pipes may be partly or completely in-filled (24) with high density ballasting material (sand, gravel, etc) or light weight flotation material (expanded polystyrene pellets, air filled plastic balls, etc), distributed so as to regulate the buoyancy properties of the overall structure. Alternatively, reinforced canvas hoses may be used instead of tubing, whereby the overall structure can retain a high degree of flexibility when flexible strips, cables and straps are employed for crosslinking a structure. In-filled material may be selected with specific material properties in mind, such as high thermal insulation or high heat capacity. A given channel may contain several materials and objects along its length, e.g. a sequence of strata of granulated material of different types, a string of plastic bottles containing gas or liquids, etc. In general, the channels in the structures can be used to accommodate technical equipment for heating/cooling, lighting, sound, etc as well as serving as conduits for cables and tubing of various types.

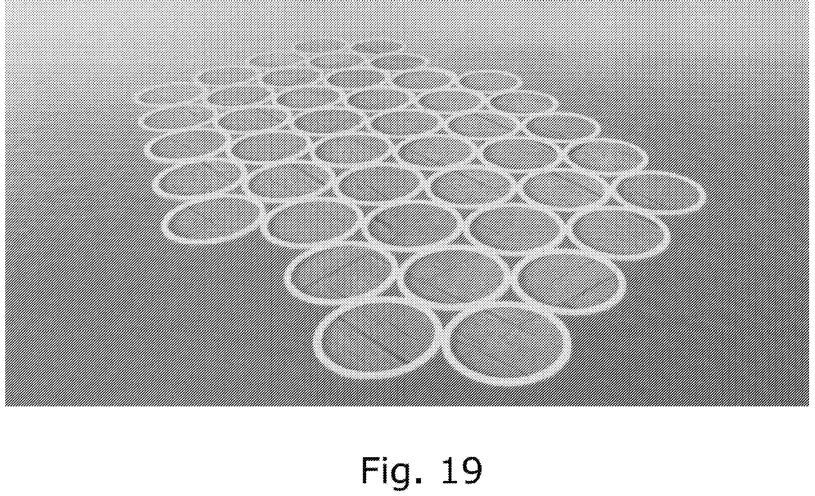

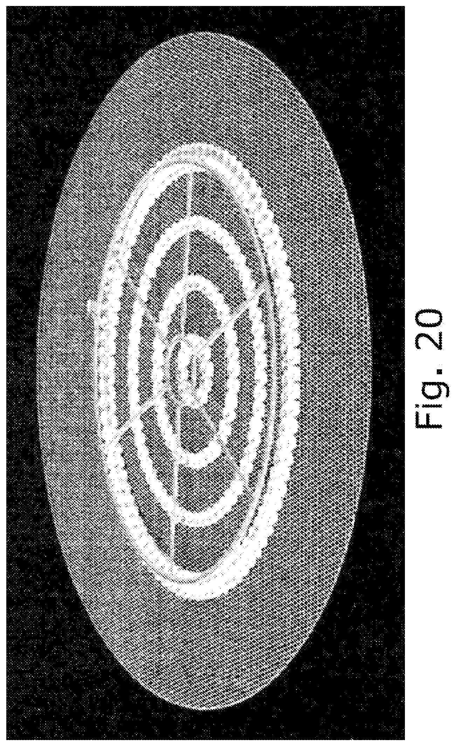

Fig.19 shows an example of macrostructures where ocean farming habitats are protected by circular enclosing walls formed from a double layer of coupled tanks or cylinders according to the present invention. Another example is shown in Fig.20, where the water surface within and outside the enclosures is covered by a network of floating, linked tanks or cylinders of smaller size.

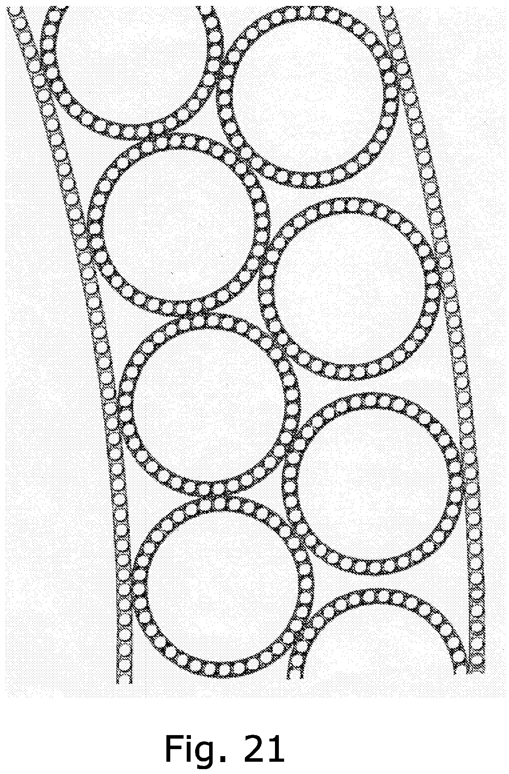

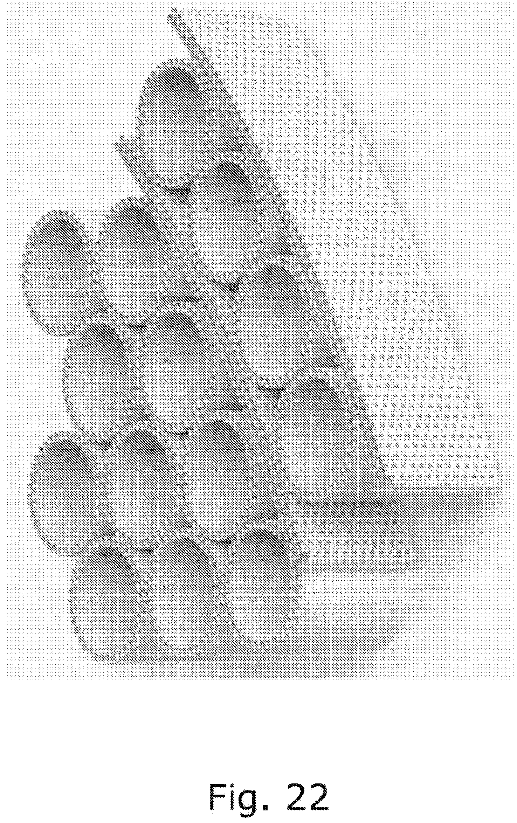

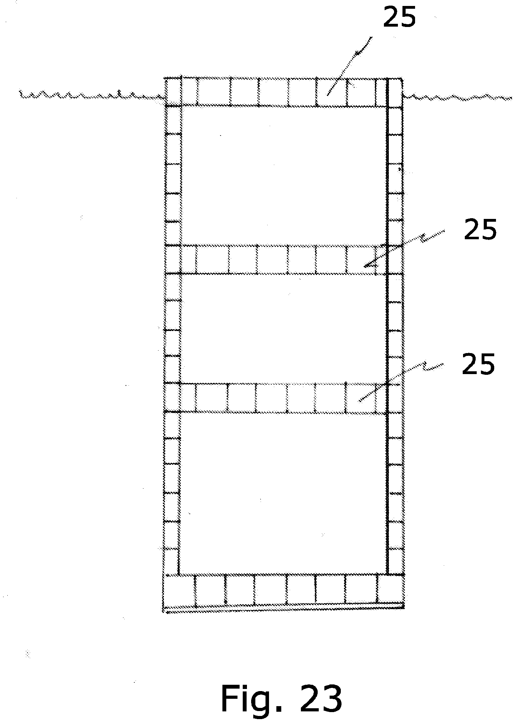

The basic architecture of the present invention permits virtually limitless scaling and cross-linking in 3 dimensions to achieve the strength and functionality required in a given situation. As an example, the wall construction in Figs. 15, 16, 17 with a single layer of coupled cylindrical tanks can be extended to two layers as shown in Fig.21, and cylinders and components of different sizes can be combined in a single macrostructure as illustrated in Figs.20, 21,22. Internal volumes in large constructions may be partly or completely filled with sub-structures and networks of coupled cylinders, tanks, walls, beams, etc made according to the basic principles taught in the present invention, providing strength and functionality to the overall construction. Fig.22 shows an example where multi-layered outer and inner walls enclose a central volume which is filled by a network of coupled cylindrical structures. Such structures may extend through the whole width and depth of the enclosed volume, or they may subdivide the volume. An example is shown in Fig.23 where planar structures (25) subdivide a tank, creating separate chambers and stiffening the walls of the tank against collapsing inward or bulging outward when subjected to differential pressure between the inside and outside.

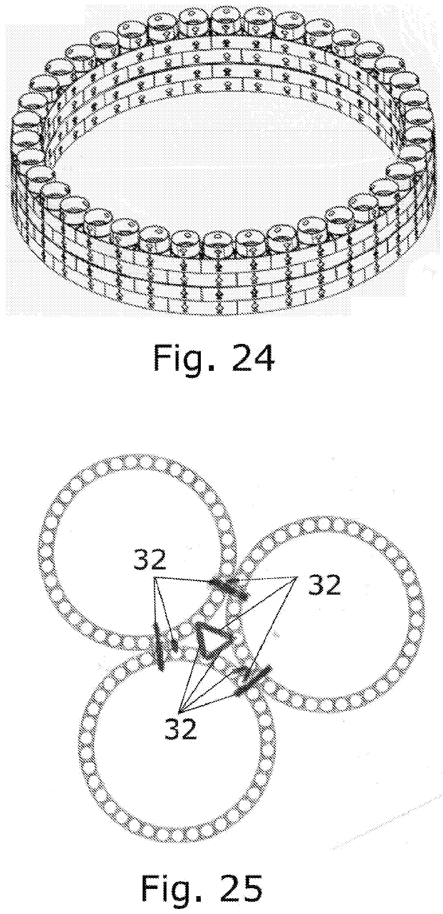

A particularly useful type of planar structures is achieved by coupling together a plurality of low aspect ratio cylinders (annuli). An example of an annulus is shown in Fig.24. It can be put side by side with similar units and connected to them by one of the methods described previously, where the walls are penetrated by pins or straps (cf. e.g. Figs.12, 13, 14).

Fig.25 shows a method where structures are lashed together by straps that are threaded through the longitudinal channels at or near the points of contact or by straps (32) that are looped around the walls of the structures. Depending on the circumstances, several types of attachment may be used at the same time.

Point or line connections in the form of straps or pins may be undesirable in situations where movement in the structure may cause wear and tear at contact points between different parts of a macrostructure. In such cases, surface-covering sheets may be wrapped tightly around each cylinder to provide strength. In addition to having high stretch strength, the sheet may be backed by an adhesive and incorporate a shock absorbing layer. The same type of sheet can be used on bundled tanks and cylinders in a coupled macrostructure. Added strength can be achieved *ad libitum* by wrapping sheets in multiple layers.

A plurality of annuli can be coupled side by side form a planar macrostructure, where the pattern of annuli is determined by the couplings between them, e.g. random, square or close-packed hexagonal (HCP) where each annulus is surrounded by six other annuli. Maximum strength against in-plane deformation or compression is generally achieved in a HCP configuration, which also provides the highest in-plane packing density of annuli. The macrostructure may be given positive, neutral or negative buoyancy in water through the choice of construction materials, by in-filling of high- or low-density materials in the vertical channels and/or by positioning buoyancy or ballast elements in the volume inside the annuli.

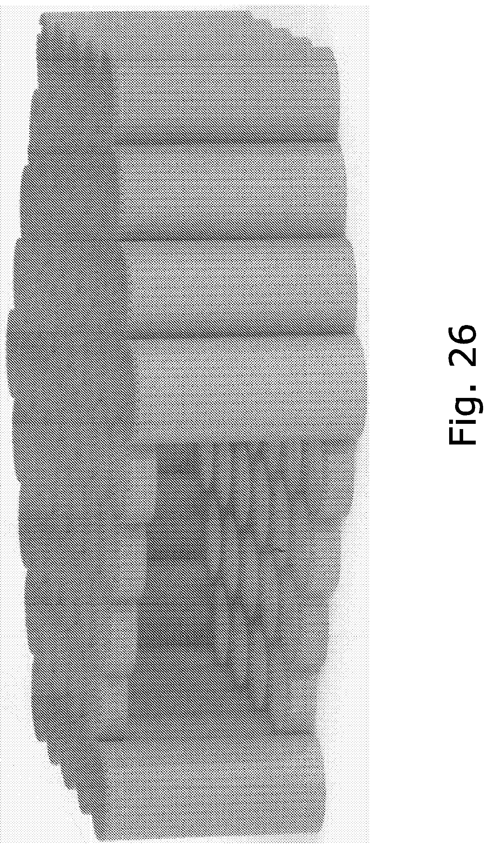

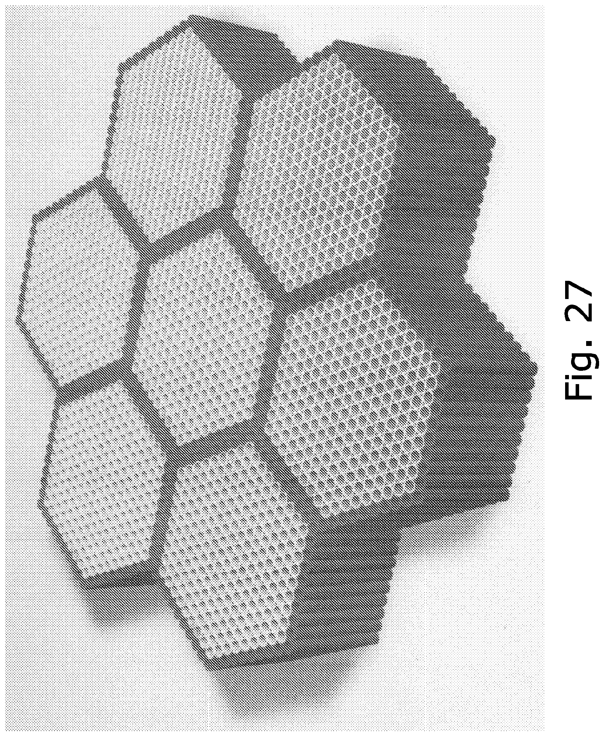

Fig.26 shows how an enclosed volume can be formed by a perimeter wall of cylindrical tanks encircling top and bottom floors consisting of coupled annuli. The structure is submerged in water (not shown), with the waterline typically defined on the sidewalls of the top floor annuli. The annuli forming the submerged bottom floor have neutral or negative buoyancy. In general, the perimeter may have any shape, e.g. circular, elongated or polygonal, and the same is the case with top and bottom floors that are accommodated inside and/or outside the perimeter and linked or tethered to it, cf. the floating floor of coupled annuli surrounding the perimeter of the macrostructure in Fig.20. In the example shown in Fig.26, the whole structure forms a hexagon of high strength, which may be coupled with similar hexagons as illustrated in Fig.27 to form a large scale basis for floating habitats.

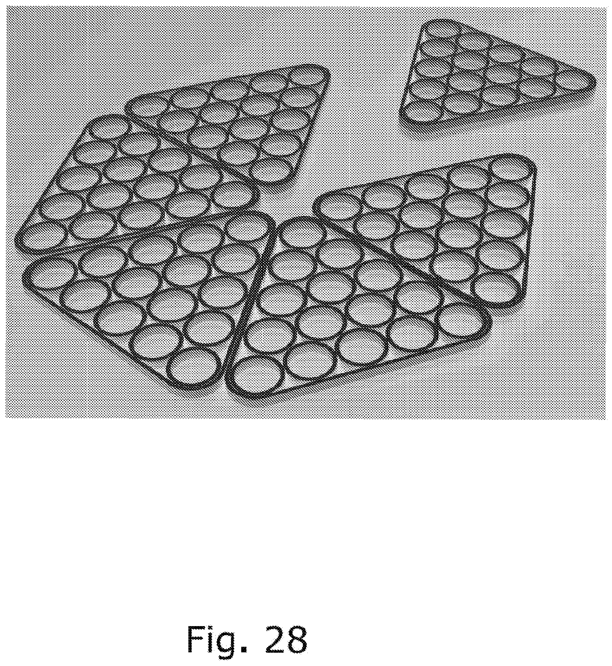

In addition to providing a flexible and scalable basis for integration into a variety of macrostructures, floating and submerged floors formed by coupled units such as annuli can form functional macrostructures in their own right. Fig.28 shows an example where a basic macrostructure, a floating triangle of coupled annuli within a framing wall, can form higher level macrostructures (in this case a rosette with 6 triangles) by linking up in aggregates.

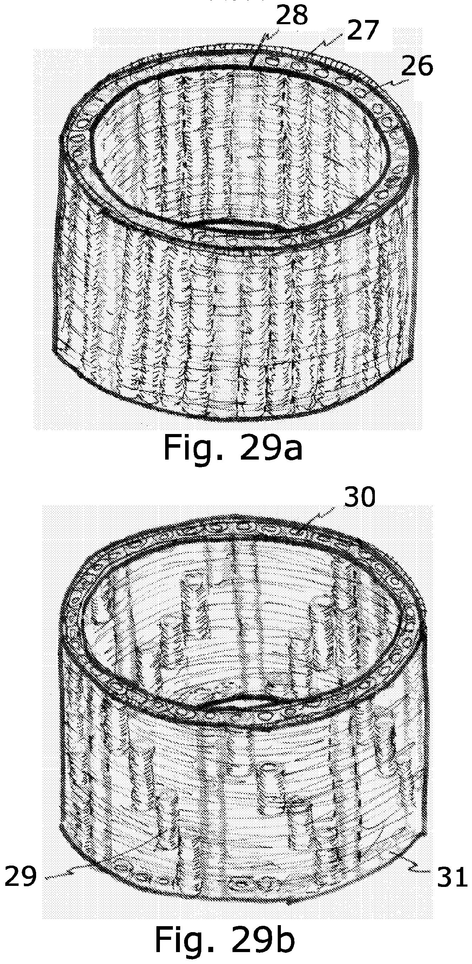

A generic perimeter wall for macrostructures, e.g. fish tanks, is shown in Fig.29a. It consists of cylinders (26) linked side by side, with a closed wall on the outside (27) and the inside (28). Typical dimensions may be, e.g.: Thickness of inner and outer walls (27), (28): 0.1 m., Diameter of cylinders (27): 1 m., Diameter of macrostructure: 50 m. For illustrative purposes the cylinders between the two walls are shown in an X-ray view in the figure. In many cases it is desirable to retain the basic macro-shape while at the same time using less material in the walls. One way of achieving this is shown in Fig.29b: A fraction of the cylinders, e.g. 4 out of 5, are replaced by cylinder segments (29) and annuli (30), (31) at the top and bottom. The cylinder segments and annuli act as spacers between the outer and inner walls and are linked laterally to provide structural strength. The density, size and distribution pattern of cylinder segments and annuli shall be chosen depending on expected mechanical stress levels, economic parameters, etc.

## Claims

1. A modular structure for being at least partly submerged in a body of water, where the modular structure comprises a plurality of structure elements (1), where each structure element (1) comprises polymers, where each structure element (1) comprises at least one protruding part (3) and at least one receiving part (2) wherein the protruding parts (3) of a structure element (1) are arranged for mating connection with the receiving parts (2) on another structure element (1), the direction of mating motion defining a longitudinal direction of the structure element (1);
- the modular structure comprises strengthening elements (9, 10, 18) for providing structural integrity to the modular structure, where the strengthening elements (9, 10, 18) are enveloping and/or penetrating at least parts of at least two structure elements (1) of the modular structure;
- the structure elements (1) are adapted to form longitudinal channels inside the at least one protruding part (3) and at least one receiving part (2), where the channels communicate across two or more structure elements (1) that are in a mated connection;
- the modular structure forms at least one closed structure, where a number of structure elements (1) that overlap partially or completely in the longitudinal direction are connected in a network that closes upon itself around a volume; and
- where the structure elements (1) and strengthening elements (9, 10, 18) are adapted to provide flexibility to the modular structure while maintaining its structural integrity by at least one of the following i) comprising material with inherent elasticity, and ii) being formed to allow relative movement between at least two structure elements (1);
where the modular structure is ***characterized in that**:*
- the structure elements (1) have apertures adapted to form channels through the structure elements (1) in at least one direction transverse to the longitudinal direction;
- the channels are adapted to guiding elongated strengthening elements.

2. The modular structure according to claim 1, where the closed structure is a tank structure delineating a volume for the storage or processing of media in fluid form or materials carried in a fluid.

3. The modular structure according to one of the claims above, where the closed structure is a cylinder.

4. The modular structure according to claim 1, where a longitudinal dimension of the closed structure is smaller than the largest dimension in a plane transversal to the longitudinal direction, such that the closed structure forms a circular or polygonal disk or annulus.

5. The modular structure according to one of the claims above, where the protruding parts (3) and the receiving parts (2) of the structure elements (1) are each provided with at least one set of two apertures positioned so that the apertures in the protruding part (3) align with the respective apertures in a receiving part (2) in longitudinally attached adjacent structure elements (1) and thus forming transversal channels perpendicular to the longitudinal direction.

6. The modular structure according to claim 5, where at least one of the strengthening elements (9, 10) is inserted in at least one of the longitudinal and the transversal channels.

7. The modular structure according to one of the claims above, where the strengthening elements (9, 10, 18) comprise at least one of the following: i) an elongated strengthening element (9, 10), and ii) a surface element (18) for enveloping at least parts of the structure.

8. The modular structure according to claim 7, where the elongated strengthening element according to i) comprises at least one of the following: a strap, a cable, a container, a tube, and a rod, and the surface element (18) according to ii) comprises at least one of the following: a foil, a tarp, a flexible plate, and a band.

9. The modular structure according to one of the claims 7 and 8, where the elongated strengthening (9, 10) element according to alternative i) is forming a closed loop attaching at least two structure elements (1) and/or modular structures.

10. The modular structure according to claim 8, where the elongated strengthening element (9, 10) is arranged according to one or more of the following alternatives: i) in the longitudinal channel and ii) along an outside of each of the at least two structure elements (1).

11. The modular structure according to claim 8, **characterized in that** the strengthening element (9, 10) comprises a container or a tube according to alternative i), where the container or tube is adapted to be filled with one ore more of the following materials: sand, gravel, earth and pellets, gas filled bodies, expanded polystyrene and polymeric-based pellets.

12. The modular structure according to claim 11, **characterized in that** the strengthening element (9, 10) acts as a buoyancy controlling device as one of the following: i) a flotation element by the container being filled with a material giving the strengthening element (9, 10) a positive buoyancy, and ii) a ballast element by the container being filled with a material giving the strengthening element (9, 10) a negative buoyancy.

13. The modular structure according to claim 5, where at least one of the strengthening elements (9, 10) is arranged for attaching at least a first and a second structure element (1) wherein the strengthening element (9, 10) is arranged to pass through a hole in each of the adjacent structure elements (1).

14. The modular structure according to claim 13, where the strengthening element (9, 10) comprises at least one of the following: pin, bolt, and clasp.

15. The modular structure according to one of the claims above, wherein the protruding part (3) and the receiving part (2) of the structure elements (1) are provided with polygonal mating surfaces so that the mating connection is made at predetermined angles between the structure element (1) and an adjacent structure element (1).

16. The modular structure according to one of the claims 4, further comprising at least one of a top floor and a bottom floor respectively arranged in a transversal plane perpendicular to the longitudinal direction, where the at least one of the top and bottom floors comprises a number of disks or annuli according to claim 4.

17. The modular structure according to claim 16, where the at least one of the top and bottom floors is in contact with an inside of the closed structure at an end in the longitudinal direction.

18. A macro structure comprising at least a first and a second modular structure according to one of the claims above, wherein the first and second modular structures are attached to each other.

19. The macro structure according to claim 18, where the at least first and second modular structures contribute to form a perimeter wall of a closed modular structure delineating a macro volume.

20. The macro structure according to claim 19, where the perimeter wall comprises an inner and/or an outer wall sandwiching the closed structures of the perimeter wall.

21. The macro structure according to one of the claims 18 to 20, where at least two of the closed modular structures are attached by an elongated strengthening element (9, 10) according to one of the claims 7 to 8.

22. The macro structure according to claim 21, where the elongated strengthening element (9, 10) is looped through a longitudinal channel or around a part of one of the at least two attached modular structures, and through a longitudinal channel or around a part of another of the at least two attached modular structures.

23. The macro structure according to one of the claims 18 to 22, where at least two contiguous closed structures are coupled by at least one surface element (18) for enveloping at least parts of the structure.

24. A method for construction of a modular structure according to one of the claims 1 to 17, **characterized by** the following steps:
assembling of the structure elements (1), such that at least a first structure element (1) connects by mutual connection and fastening to a second structure element (1),
in that the first and second structure elements (1) when connected form at least one longitudinal channel.

25. Method according to claim 24, and where the method further comprises the following steps:
a. establishing a first part of the modular structure;
b. assembling of structure elements (1) where the assembling occurs with the modular structure floating partially submerged in the body of water; and
c. sinking of the modular structure such that the assembly occurs at approximately a constant height over the body of water.

26. Method according to claim 25, where the assembly occurs by sequential application of the structure elements (1), layer by layer.

## Patentansprüche

1. Modulare Struktur, die zumindest teilweise in ein Gewässer eingetaucht werden kann, wobei die modulare Struktur mehrere Strukturelemente (1) umfasst, wobei jedes Strukturelement (1) Polymere umfasst, wobei jedes Strukturelement (1) mindestens ein vorstehendes Teil (3) und mindestens ein Aufnahmeteil (2) umfasst, wobei die vorstehenden Teile (3) eines Strukturelements (1) für eine passende Verbindung mit den Aufnahmeteilen (2) an einem anderen Strukturelement (1) angeordnet sind, wobei die Richtung der passenden Bewegung eine Längsrichtung des Strukturelements (1) definiert;
- die modulare Struktur Verstärkungselemente (9, 10, 18) zum Bereitstellen der strukturellen Integrität der modularen Struktur umfasst, wobei die Verstärkungselemente (9, 10, 18) mindestens Teile von mindestens zwei Strukturelementen (1) der modularen Struktur umhüllen und/oder durchdringen;
- die Strukturelemente (1) so angepasst sind, dass sie längs verlaufende Kanäle innerhalb des mindestens einen vorstehenden Teils (3) und mindestens eines Aufnahmeteils (2) bilden, wobei die Kanäle über zwei oder mehr Strukturelemente (1) hinweg in Verbindung stehen, die in einer passenden Verbindung stehen;
- die modulare Struktur mindestens eine geschlossene Struktur bildet, wobei eine Anzahl von Strukturelementen (1), die sich in Längsrichtung teilweise oder vollständig überlappen, in einem Netzwerk verbunden sind, das sich um ein Volumen herum in sich selbst schließt; und
- wobei die Strukturelemente (1) und Verstärkungselemente (9, 10, 18) so angepasst sind, dass sie der modularen Struktur Flexibilität verleihen, während sie ihre strukturelle Integrität durch mindestens eines der folgenden Merkmale aufrechterhalten: i) sie bestehen aus Material mit inhärenter Elastizität und ii) sie sind so geformt, dass sie eine relative Bewegung zwischen mindestens zwei Strukturelementen (1) ermöglichen;
wobei die modulare Struktur ***dadurch gekennzeichnet ist, dass**:*
- die Strukturelemente (1) Öffnungen aufweisen, die angepasst sind, um Kanäle durch die Strukturelemente (1) in mindestens einer Richtung quer zur Längsrichtung zu bilden;
- die Kanäle so angepasst sind, dass sie längliche Verstärkungselemente führen.

2. Modulare Struktur nach Anspruch 1, wobei die geschlossene Struktur eine Tankstruktur ist, die ein Volumen für die Lagerung oder Verarbeitung von Medien in flüssiger Form oder von in einer Flüssigkeit transportierten Materialien abgrenzt.

3. Modulare Struktur gemäß einem der obigen Ansprüche, wobei die geschlossene Struktur ein Zylinder ist.

4. Modulare Struktur gemäß Anspruch 1, wobei eine Längsabmessung der geschlossenen Struktur kleiner ist als die größte Abmessung in einer Ebene quer zur Längsrichtung, so dass die geschlossene Struktur eine kreisförmige oder vieleckige Scheibe oder einen Ring bildet.

5. Modulare Struktur gemäß einem der obigen Ansprüche, wobei die vorstehenden Teile (3) und die Aufnahmeteile (2) der Strukturelemente (1) jeweils mit mindestens einem Satz von zwei Öffnungen versehen sind, die so positioniert sind, dass die Öffnungen im vorstehenden Teil (3) mit den jeweiligen Öffnungen in einem Aufnahmeteil (2) in längsseitig angebrachten benachbarten Strukturelementen (1) ausgerichtet sind und somit Querkanäle senkrecht zur Längsrichtung bilden.

6. Modulare Struktur nach Anspruch 5, wobei mindestens eines der Verstärkungselemente (9, 10) in mindestens einen der Längs- und Querkanäle eingesetzt ist.

7. Modulare Struktur nach einem der obigen Ansprüche, wobei die Verstärkungselemente (9, 10, 18) mindestens eines der Folgenden umfassen: i) ein längliches Verstärkungselement (9, 10) und ii) ein Oberflächenelement (18) zum Umhüllen von mindestens Teilen der Struktur.

8. Modulare Struktur nach Anspruch 7, wobei das längliche Verstärkungselement nach i) mindestens eines der Folgenden umfasst: einen Gurt, ein Kabel, einen Behälter, ein Rohr und eine Stange, und das Oberflächenelement (18) nach ii) mindestens eines der Folgenden umfasst: eine Folie, eine Plane, eine flexible Platte und ein Band.

9. Modulare Struktur nach einem der Ansprüche 7 und 8, wobei das längliche Verstärkungselement (9, 10) gemäß Alternative i) eine geschlossene Schleife bildet, die mindestens zwei Strukturelemente (1) und/oder modulare Strukturen befestigt.

10. Modulare Struktur nach Anspruch 8, wobei das längliche Verstärkungselement (9, 10) gemäß einer oder mehreren der folgenden Alternativen angeordnet ist: i) in dem Längskanal und ii) entlang einer Außenseite jedes der mindestens zwei Strukturelemente (1).

11. Modulare Struktur nach Anspruch 8, **dadurch gekennzeichnet, dass** das Verstärkungselement (9, 10) einen Behälter oder ein Rohr gemäß Alternative i) umfasst, wobei der Behälter oder das Rohr angepasst ist, um mit einem oder mehreren der folgenden Materialien gefüllt zu werden: Sand, Kies, Erde und Pellets, gasgefüllte Körper, expandiertes Polystyrol und Pellets auf Polymerbasis.

12. Die modulare Struktur gemäß Anspruch 11, **dadurch gekennzeichnet, dass** das Verstärkungselement (9, 10) als eine der folgenden Auftriebsregelungsvorrichtungen wirkt: i) ein Schwimmkörperelement, indem der Behälter mit einem Material gefüllt wird, das dem Verstärkungselement (9, 10) einen positiven Auftrieb verleiht, und ii) ein Ballastelement, indem der Behälter mit einem Material gefüllt wird, das dem Verstärkungselement (9, 10) einen negativen Auftrieb verleiht.

13. Modulare Struktur nach Anspruch 5, wobei mindestens eines der Verstärkungselemente (9, 10) zur Befestigung mindestens eines ersten und eines zweiten Strukturelements (1) angeordnet ist, wobei das Verstärkungselement (9, 10) so angeordnet ist, dass es ein Loch in jedem der benachbarten Strukturelemente (1) durchläuft.

14. Modulare Struktur nach Anspruch 13, wobei das Verstärkungselement (9, 10) mindestens eines der folgenden Elemente umfasst: Stift, Schraube und Klammer.

15. Modulare Struktur nach einem der obigen Ansprüche, wobei der vorstehende Teil (3) und der Aufnahmeteil (2) der Strukturelemente (1) mit polygonalen Passflächen versehen sind, so dass die Passverbindung in vorbestimmten Winkeln zwischen dem Strukturelement (1) und einem benachbarten Strukturelement (1) hergestellt wird.

16. Modulare Struktur gemäß einem der Ansprüche 4, die ferner mindestens eine obere Etage und/oder eine untere Etage umfasst, die jeweils in einer Querebene senkrecht zur Längsrichtung angeordnet sind, wobei das mindestens eine der oberen und unteren Stockwerke eine Anzahl von Scheiben oder Ringen gemäß Anspruch 4 umfasst.

17. Modulare Struktur nach Anspruch 16, wobei die mindestens eine der oberen und unteren Etagen an einem Ende in Längsrichtung mit einer Innenseite der geschlossenen Struktur in Kontakt steht.

18. Makrostruktur, die mindestens eine erste und eine zweite modulare Struktur nach einem der vorstehenden Ansprüche umfasst, wobei die erste und die zweite modulare Struktur aneinander befestigt sind.

19. Makrostruktur nach Anspruch 18, wobei die wenigstens erste und zweite modulare Struktur dazu beitragen, eine Umfangswand einer geschlossenen modularen Struktur zu bilden, die ein Makrovolumen abgrenzt.

20. Makrostruktur nach Anspruch 19, wobei die Umfangswand eine innere und/oder eine äußere Wand umfasst, die die geschlossenen Strukturen der Umfangswand sandwichartig umschließt.

21. Makrostruktur nach einem der Ansprüche 18 bis 20, wobei mindestens zwei der geschlossenen modularen Strukturen durch ein längliches Verstärkungselement (9, 10) nach einem der Ansprüche 7 bis 8 befestigt sind.

22. Makrostruktur gemäß Anspruch 21, wobei das längliche Verstärkungselement (9, 10) durch einen Längskanal oder um einen Teil einer der mindestens zwei angebrachten modularen Strukturen und durch einen Längskanal oder um einen Teil einer anderen der mindestens zwei angebrachten modularen Strukturen geschlungen ist.

23. Makrostruktur nach einem der Ansprüche 18 bis 22, wobei mindestens zwei zusammenhängende geschlossene Strukturen durch mindestens ein Oberflächenelement (18) gekoppelt sind, um mindestens Teile der Struktur zu umhüllen.

24. Verfahren zum Aufbau einer modularen Struktur nach einem der Ansprüche 1 bis 17, **gekennzeichnet durch** die folgenden Schritte:
Zusammenbau der Strukturelemente (1), so dass mindestens ein erstes Strukturelement (1) durch gegenseitige Verbindung und Befestigung mit einem zweiten Strukturelement (1) verbunden wird.
wobei das erste und das zweite Strukturelement (1) bei Verbindung mindestens einen Längskanal bilden.

25. Verfahren nach Anspruch 24, wobei das Verfahren ferner die folgenden Schritte umfasst:
a. Aufbau eines ersten Teils der modularen Struktur;
b. Zusammenbau von Strukturelementen (1), wobei der Zusammenbau erfolgt, während die modulare Struktur teilweise untergetaucht im Wasserkörper schwimmt; und
c. Absenken der modularen Struktur, so dass der Zusammenbau in etwa konstanter Höhe über dem Wasserkörper erfolgt.

26. Verfahren nach Anspruch 25, wobei der Zusammenbau erfolgt durch aufeinanderfolgendes Aufbringen der Strukturelemente (1) Schicht für Schicht.

## Revendications

1. Structure modulaire destinée à être au moins partiellement immergée dans une masse d'eau, où la structure modulaire comprend une pluralité d'éléments de structure (1), où chaque élément de structure (1) comprend des polymères, où chaque élément de structure (1) comprend au moins une partie saillante (3) et au moins une partie réceptrice (2) dans laquelle les parties saillantes (3) d'un élément de structure (1) sont agencées pour une connexion d'accouplement avec les parties réceptrices (2) sur un autre élément de structure (1), la direction de mouvement d'accouplement définissant une direction longitudinale de l'élément de structure (1) ;
- la structure modulaire comprend des éléments de renforcement (9, 10, 18) pour fournir une intégrité structurelle à la structure modulaire, où les éléments de renforcement (9, 10, 18) enveloppent et/ou pénètrent au moins des parties d'au moins deux éléments de structure (1) de la structure modulaire ;
- les éléments de structure (1) sont adaptés pour former des canaux longitudinaux à l'intérieur de l'au moins une partie saillante (3) et d'au moins une partie réceptrice (2), où les canaux communiquent à travers deux ou plusieurs éléments de structure (1) qui sont dans une connexion accouplée ;
- la structure modulaire forme au moins une structure fermée, où un nombre d'éléments de structure (1) qui se chevauchent partiellement ou complètement dans la direction longitudinale sont reliés dans un réseau qui se ferme sur lui-même autour d'un volume ; et
- où les éléments de structure (1) et les éléments de renforcement (9, 10, 18) sont adaptés pour fournir une flexibilité à la structure modulaire tout en maintenant son intégrité structurelle par au moins l'un des éléments suivants i) comprenant un matériau à élasticité inhérente, et ii) étant formés pour permettre un mouvement relatif entre au moins deux éléments de structure (1) ;
où la structure modulaire est ***caractérisée en ce que*** :
- les éléments de structure (1) ont des ouvertures adaptées pour former des canaux à travers les éléments de structure (1) dans au moins une direction transversale à la direction longitudinale ;
- les canaux sont adaptés au guidage d'éléments de renforcement allongés.

2. Structure modulaire selon la revendication 1, où la structure fermée est une structure de réservoir délimitant un volume pour le stockage ou le traitement de milieux sous forme fluide ou de matériaux transportés dans un fluide.

3. Structure modulaire selon l'une des revendications précédentes, où la structure fermée est un cylindre.

4. Structure modulaire selon la revendication 1, où une dimension longitudinale de la structure fermée est plus petite que la plus grande dimension dans un plan transversal à la direction longitudinale, de sorte que la structure fermée forme un disque ou un anneau circulaire ou polygonal.

5. Structure modulaire selon l'une des revendications précédentes, où les parties saillantes (3) et les parties réceptrices (2) des éléments de structure (1) sont chacune pourvues d'au moins un ensemble de deux ouvertures positionnées de sorte que les ouvertures dans la partie saillante (3) s'alignent avec les ouvertures respectives dans une partie réceptrice (2) dans des éléments de structure adjacents fixés longitudinalement (1) et formant ainsi des canaux transversaux perpendiculaires à la direction longitudinale.

6. Structure modulaire selon la revendication 5, où au moins un des éléments de renforcement (9, 10) est inséré dans au moins un des canaux longitudinaux et transversaux.

7. Structure modulaire selon l'une des revendications précédentes, où les éléments de renforcement (9, 10, 18) comprennent au moins l'un des éléments suivants : i) un élément de renforcement allongé (9, 10), et ii) un élément de surface (18) pour envelopper au moins des parties de la structure.

8. Structure modulaire selon la revendication 7, où l'élément de renforcement allongé selon i) comprend au moins l'un des éléments suivants : une sangle, un câble, un conteneur, un tube et une tige, et l'élément de surface (18) selon ii) comprend au moins l'un des éléments suivants : une feuille, une bâche, une plaque flexible et un cordon.

9. Structure modulaire selon l'une des revendications 7 et 8, où l'élément de renforcement allongé (9, 10) selon l'alternative i) forme une boucle fermée fixant au moins deux éléments de structure (1) et/ou structures modulaires.

10. Structure modulaire selon la revendication 8, où l'élément de renforcement allongé (9, 10) est agencé selon une ou plusieurs des alternatives suivantes : i) dans le canal longitudinal et ii) le long d'un extérieur de chacun des au moins deux éléments de structure (1).

11. Structure modulaire selon la revendication 8, **caractérisée en ce que** l'élément de renforcement (9, 10) comprend un conteneur ou un tube selon l'alternative i), où le conteneur ou le tube est adapté pour être rempli avec un ou plusieurs des matériaux suivants : sable, gravier, terre et pastilles, corps remplis de gaz, pastilles de polystyrène expansé et à base de polymère.

12. Structure modulaire selon la revendication 11, **caractérisée en ce que** l'élément de renforcement (9, 10) agit comme un dispositif de contrôle de la flottabilité comme l'un des éléments suivants : i) un élément de flottaison par le fait que le conteneur est rempli d'un matériau donnant à l'élément de renforcement (9, 10) une flottabilité positive, et ii) un élément de ballast par le fait que le conteneur est rempli d'un matériau donnant à l'élément de renforcement (9, 10) une flottabilité négative.

13. Structure modulaire selon la revendication 5, où au moins un des éléments de renforcement (9, 10) est agencé pour fixer au moins un premier et un second éléments de structure (1), dans laquelle l'élément de renforcement (9, 10) est agencé pour passer à travers un trou dans chacun des éléments de structure adjacents (1).

14. Structure modulaire selon la revendication 13, où l'élément de renforcement (9, 10) comprend au moins l'un des éléments suivants : broche, boulon et fermoir.

15. Structure modulaire selon l'une des revendications précédentes, dans laquelle la partie saillante (3) et la partie réceptrice (2) des éléments de structure (1) sont pourvues de surfaces d'accouplement polygonales de sorte que la connexion d'accouplement soit effectuée à des angles prédéterminés entre l'élément de structure (1) et un élément de structure adjacent (1).

16. Structure modulaire selon l'une des revendications 4, comprenant en outre au moins l'un d'un plancher supérieur et d'un plancher inférieur respectivement agencés dans un plan transversal perpendiculaire à la direction longitudinale, où l'au moins un des planchers supérieur et inférieur comprend un nombre de disques ou d'anneaux selon la revendication 4.

17. Structure modulaire selon la revendication 16, où l'au moins un des planchers supérieur et inférieur est en contact avec un intérieur de la structure fermée à une extrémité dans la direction longitudinale.

18. Macrostructure comprenant au moins une première et une seconde structure modulaire selon l'une des revendications précédentes, dans laquelle les première et seconde structures modulaires sont fixées l'une à l'autre.

19. Macrostructure selon la revendication 18, où les au moins première et seconde structures modulaires contribuent à former une paroi périphérique d'une structure modulaire fermée délimitant un macro-volume.

20. Macrostructure selon la revendication 19, où la paroi périphérique comprend une paroi intérieure et/ou extérieure prenant en sandwich les structures fermées de la paroi périphérique.

21. Macrostructure selon l'une des revendications 18 à 20, où au moins deux des structures modulaires fermées sont fixées par un élément de renforcement allongé (9, 10) selon l'une des revendications 7 à 8.

22. Macrostructure selon la revendication 21, où l'élément de renforcement allongé (9, 10) est en boucle à travers un canal longitudinal ou autour d'une partie de l'une des au moins deux structures modulaires fixées, et à travers un canal longitudinal ou autour d'une partie de l'autre des au moins deux structures modulaires fixées.

23. Macrostructure selon l'une des revendications 18 à 22, où au moins deux structures fermées contiguës sont couplées par au moins un élément de surface (18) pour envelopper au moins des parties de la structure.

24. Procédé de construction d'une structure modulaire selon l'une des revendications 1 à 17, **caractérisé par** les étapes suivantes :
assemblage des éléments de structure (1), de sorte qu'au moins un premier élément de structure (1) se relie par connexion mutuelle et fixation à un second élément de structure (1),
en ce que les premier et second éléments de structure (1), lorsqu'ils sont reliés, forment au moins un canal longitudinal.

25. Procédé selon la revendication 24, dans lequel le procédé comprend en outre les étapes suivantes :
a. établir une première partie de la structure modulaire ;
b. assembler des éléments de structure (1) où l'assemblage se produit avec la structure modulaire flottant partiellement immergée dans la masse d'eau ; et
c. enfoncer la structure modulaire de sorte que l'assemblage se produise à une hauteur approximativement constante au-dessus de la masse d'eau.

26. Procédé selon la revendication 25, où l'assemblage se produit par application séquentielle des éléments de structure (1), couche par couche.
